(19) **Europäisches Patentamt / European Patent Office / Office européen des brevets**

(11) **EP 1 820 101 B1**

(12) **EUROPEAN PATENT SPECIFICATION**

(45) Date of publication and mention of the grant of the patent:
**31.12.2014 Bulletin 2015/01**

(21) Application number: **05823134.1**

(22) Date of filing: **04.11.2005**

(51) Int Cl.:
*H04L 12/58* (2006.01)    *G06F 11/00* (2006.01)
*G06F 11/30* (2006.01)    *G06F 11/22* (2006.01)
*G06F 12/14* (2006.01)    *H04L 9/32* (2006.01)
*G06F 11/32* (2006.01)    *G06F 11/34* (2006.01)

(86) International application number:
**PCT/US2005/039978**

(87) International publication number:
**WO 2006/052736 (18.05.2006 Gazette 2006/20)**

(54) **MESSAGE PROFILING SYSTEMS AND METHODS**

NACHRICHTENPROFILIERUNGSSYSTEME UND -VERFAHREN

SYSTEMES ET PROCEDES DE PROFILAGE DE MESSAGES

(84) Designated Contracting States:
**AT BE BG CH CY CZ DE DK EE ES FI FR GB GR HU IE IS IT LI LT LU LV MC NL PL PT RO SE SI SK TR**

(30) Priority: **05.11.2004 US 625507 P**
**02.06.2005 US 142943**
**01.07.2005 US 173941**

(43) Date of publication of application:
**22.08.2007 Bulletin 2007/34**

(60) Divisional application:
**14185053.7**

(73) Proprietor: **McAfee, Inc.**
**Santa Clara, CA 95054 (US)**

(72) Inventors:
• **JUDGE, Paul**
  **Alpharetta, GA 30022 (US)**
• **RAJAN, Guru**
  **Duluth, GA 30097 (US)**
• **ALPEROVITCH, Dmitri**
  **Atlanta, GA 30326 (US)**
• **MOYER, Matt**
  **Lawrenceville, GA 30044 (US)**
• **KRASSER, Sven**
  **Atlanta, GA 30308 (US)**

(74) Representative: **Goddar, Heinz J. et al**
**Boehmert & Boehmert**
**Anwaltspartnerschaft mbB**
**Patentanwälte Rechtsanwälte**
**Pettenkoferstrasse 20-22**
**80336 München (DE)**

(56) References cited:
**WO-A2-03/077071**    **US-A- 6 161 130**
**US-A1- 2004 177 120**    **US-A1- 2004 177 120**
**US-A1- 2004 267 893**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND AND SUMMARY

This document relates generally to systems and methods for processing communications and more particularly to systems and methods for filtering communications.

In the anti-spam industry, spammers use various creative means for evading detection by spam filters. Available anti-spam systems include fail-open systems in which all incoming messages are filtered for spam. However, these systems can be inefficient and inaccurate in properly classifying messages as legitimate or spam.

WO 03/077071 A2 discloses systems and methods for enhancing electronic communication security. In WO 03/077071 A2, when a message is received from a sender on a whitelist, an associated level of trust is retrieved or calculated. The trust level value may be a value associated with a corresponding whitelist entry that simply requires to be retrieved. Further, the trust level value can be calculated as a weighted sum of various characteristics of the entry, wherein the weights can be statically defined. The associated level of trust is compared to a threshold level. If a trust level of a communication meets or exceeds the trust level threshold, the communication can bypass message interrogation. Otherwise, the communication is processed with at least some interrogation. Messages that bypass interrogation as well as messages that pass interrogation can be delivered to the corresponding recipient.

US 2004/0177120 A1 discloses a method for filtering e-mail messages based on an identification of a true sender and for assessing the reputation of the true sender among other users of an e-mail network. Once the true sender of an e-mail message has been identified, the reputation of the true sender is assessed in order to determine whether the e-mail should be passed to the recipient or disposed off according to the recipient's preferences for handling suspected junk e-mail. To this, a central database tracks statistics about true senders, which are supplied by any user of the e-mail network. These statistics include, for example, the number of users who have placed the true sender on a whitelist, the number of users who have placed the true sender on a blacklist, the number of e-mails the true sender has sent since any user in the e-mail network first received a message from the true sender, etc. Based on the information stored at the central database, the reputation of a true sender is evaluated to determine whether it is above a threshold set by the recipient. If the true sender's reputation does exceed the threshold, the message is passed to the recipient. Otherwise, the message is disposed of according to the recipient's preferences.

In accordance with the teachings disclosed herein, methods and systems are provided for operation upon one or more data processors that assign a reputation to a messaging entity.

In particular, the teachings relate to an operation method according to claim 1, to a reputation system according to claim 9, to a transmission filtering method according to claim 10, and to a filtering system according to claim 13. Advantageous embodiments thereof are defined in the respective dependent claims.

BRIEF DESCRIPTION OF THE DRAWINGS

FIG. **1** is a block diagram depicting a system for handling transmissions received over a network.
FIG. **2** is a block diagram depicting a reputation system that has been configured for determining reputation scores.
FIG. **3** is a table depicting reputation scores at various calculated probability values.
FIG. **4** is a graph depicting reputation scores at various calculated probability values.
FIG. **5** is a flowchart depicting an operational scenario for generating reputation scores.
FIG. **6** is a block diagram depicting use of non-reputable criteria and reputable criteria for determining reputation scores.
FIG. **7** is a block diagram depicting a reputation system configured to respond with a return value that includes the reputation score of a sender.
FIG. **8** is a block diagram depicting a system for handling transmissions received over a network.
FIG. **9** is a block diagram depicting a filtering system having a message profiler program.
FIG. **10** is a block diagram depicting a message classification tuner program.
FIG. **11** is a block diagram depicting use of a genetic algorithm as a message classification tuner program.
FIG. **12** is a flowchart depicting an operational scenario wherein a message profiler is used.
FIG. **13** is a block diagram depicting a message profiler that has been adapted to operate with an adaptive message blocking and whitelisting.
FIG. **14** is a block diagram depicting a reputation system for handling transmissions received over a network.
FIG. **15** is a block diagram depicting a reputation system that has been configured for determining reputation scores.
FIG. **16** is a table depicting reputation scores at various calculated probability values.
FIG. **17** is a block diagram depicting a server access architecture.

DETAILED DESCRIPTION

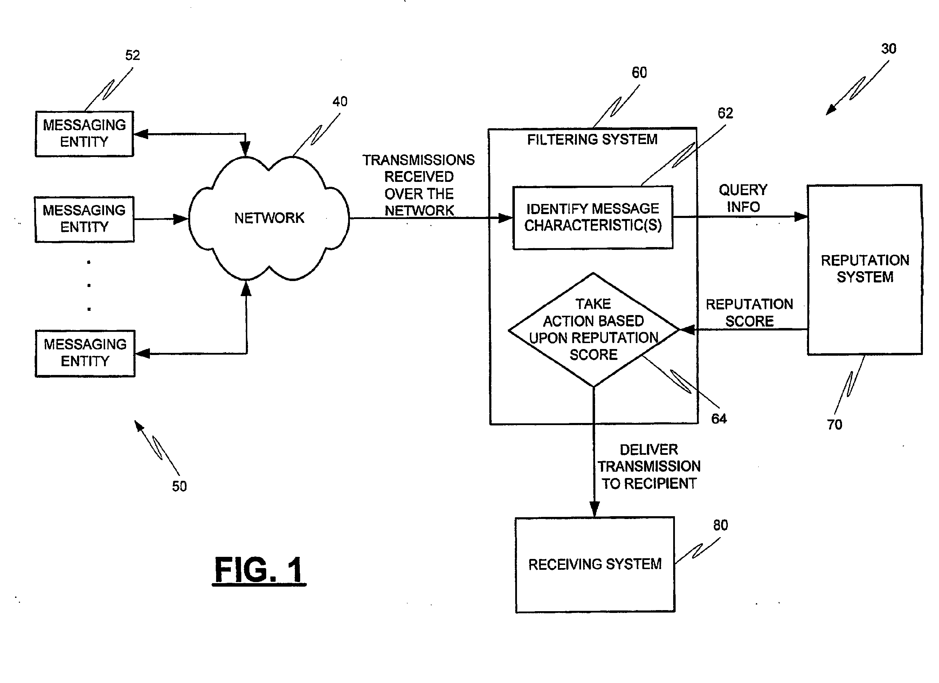

FIG. **1** depicts at **30** a system for handling transmissions received over a network **40**. The transmissions can be many different types of communications, such as electronic mail (e-mail) messages sent from one or more messaging entities **50**. The system **30** assigns a classification to a messaging entity (e.g., messaging entity **52)**, and based upon the classification assigned to the messaging entity, an action is taken with respect to the messaging entity's communication.

The system **30** uses a filtering system **60** and a reputation system **70** to help process communications from the messaging entities **50**. The filtering system **60** uses the reputation system **70** to help determine what filtering action (if any) should be taken upon the messaging entities' communications. For example, the communication may be determined to be from a reputable source and thus the communication should not be filtered.

The filtering system **60** identifies at **62** one or more message characteristics associated with a received communication and provides that identification information to the reputation system **70**. The reputation system **70** evaluates the reputation by calculating probabilities that the identified message characteristic(s) exhibit certain qualities. An overall reputation score is determined based upon the calculated probabilities and is provided to the filtering system **60**.

The filtering system **60** examines at **64** the reputation score in order to determine what action should be taken for the sender's communication (such as whether the communication transmission should be delivered to the communication's designated recipient located within a message receiving system **80)**. The filtering system **60** could decide that a communication should be handled differently based in whole or in part upon the reputation scored that was provided by the reputation system **70**. As an illustration, a communication may be determined to be from a non-reputable sender and thus the communication should be handled as Spam (e.g., deleted, quarantined, etc.).

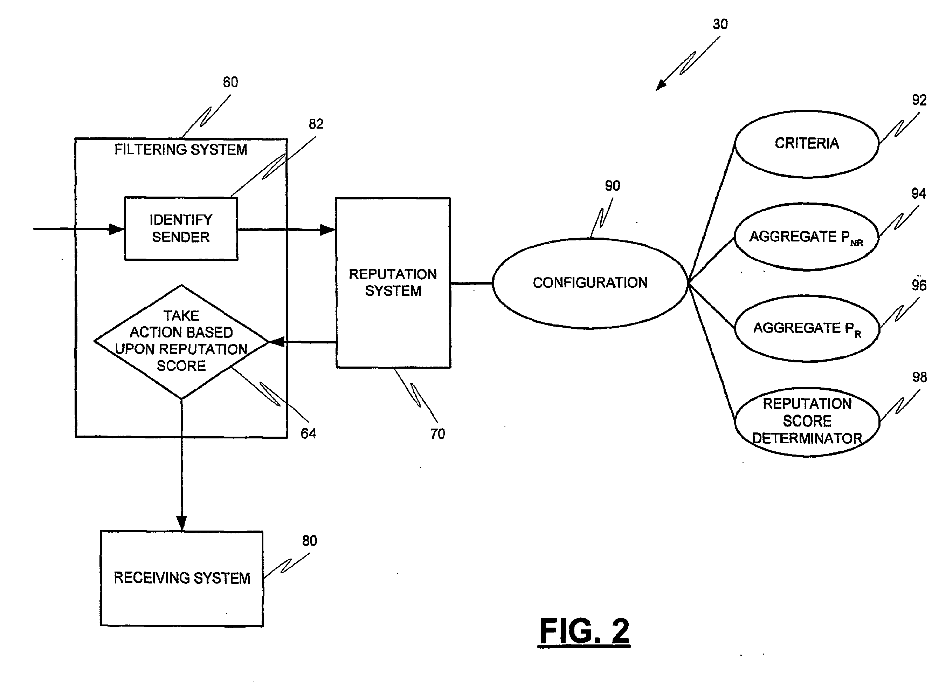

Reputation systems may be configured in many different ways in order to assist a filtering system. For example, a reputation system **70** can be located externally or internally relative to the filtering system **60** depending upon the situation at hand. As another example, FIG. **2** depicts a reputation system **70** that has been configured to calculate reputation scores based upon such message characteristic identification information as sender identity as shown at **82.** It should be understood that other message characteristics can be used instead of or in addition to sender identity. Moreover, transmissions may be from many different types of messaging entities, such as a domain name, IP address, phone number, or individual electronic address or username representing an organization, computer, or individual user that transmits electronic messages. For example, generated classifications of reputable and non-reputable can be based upon a tendency for an IP address to send unwanted transmissions or legitimate communication.

The system's configuration **90** could also, as shown in FIG. **2,** be established by identifying a set of binary, testable criteria **92** which appear to be strong discriminators between good and bad senders. $P(NK|C_i)$ can be defined as the probability that a sender is non-reputable, given that it conforms to quality/criterion $C_i$, and $P(R|C_i)$ can be defined as the probability that a sender is reputable, given that it conforms to quality/criterion $C_i$.

For each quality/criterion $C_i$, periodic (e.g., daily, weekly, monthly, etc.) sampling exercises can be performed to recalculate $P(NR|C_i)$. A sampling exercise may include selecting a random sample set S of N senders for which quality/criterion $C_i$ is known to be true. The senders in the sample are then sorted into one of the following sets: reputable ($R$), non-reputable ($NR$) or unknown ($U$). $N_R$ is the number of senders in the sample that are reputable senders, $N_{NR}$ is the number of senders that are non-reputable senders, etc. Then, $P(NK|C_i)$ and $P(R|C_i)$ are estimated using the formulas:

$$P(NR \mid C_i) = \frac{N_{NR}}{N}$$

$$P(R \mid C_i) = \frac{N_R}{N}$$

For this purpose, $N = $ **30** was determined to be a large enough sample size to achieve an accurate estimate of $P(NR|C_i)$ and $P(R|C_i)$ for each quality/criterion $C_i$.

After calculating $P(NK|C_i)$ and $P(R|C_i)$ for all criteria, the computed probabilities are used to calculate an aggregate non-reputable probability **94**, $P_{NR}$, and an aggregate reputable sender probability **96**, $P_R$, for each sender in the reputation space. These probabilities can be calculated using the formulas:

$$P_{NR} = \left(1 - \prod_{i=1}^{N} \begin{cases} 1 - P(NR \mid C_i) & \text{if criterion } i \text{ applies} \\ 1 & \text{otherwise} \end{cases}\right)^{(\# \text{of criteria that apply})}$$

$$P_{R} = \left(1 - \prod_{i=1}^{N} \begin{cases} 1 - P(R \mid C_i) & \text{if criterion } i \text{ applies} \\ 1 & \text{otherwise} \end{cases}\right)^{(\# \text{of criteria that apply})}$$

In experimentation, the above formulas appeared to behave very well for a wide range of input criteria combinations, and in practice their behavior appears to be similar to the behavior of the formula for correctly computing naïve joint conditional probabilities of "non-reputable" and "reputable" behavior for the input criteria.

After calculating $P_{NR}$ and $P_R$ for each sender, a reputation score is calculated for that sender using the following reputation function:

$$f(P_{NR}, P_R) = (c_1 + c_2 P_{NR} + c_2 P_R + c_3 P_{NR}^2 + c_3 P_R^2 + c_4 P_{NR} P_R + c_5 P_{NR}^3$$
$$+ c_5 P_R^3 + c_6 P_{NR} P_R^2 + c_6 P_{NR}^2 P_R)((P_{NR} - P_R)^3 + c_7 (P_{NR} - P_R))$$

where

$c_1$ = 86.50
$c_2$ = -193.45
$c_3$ = -35.19
$c_4$ = 581.09
$c_5$ = 234.81
$c_6$ = -233.18
$c_7$ = 0.51

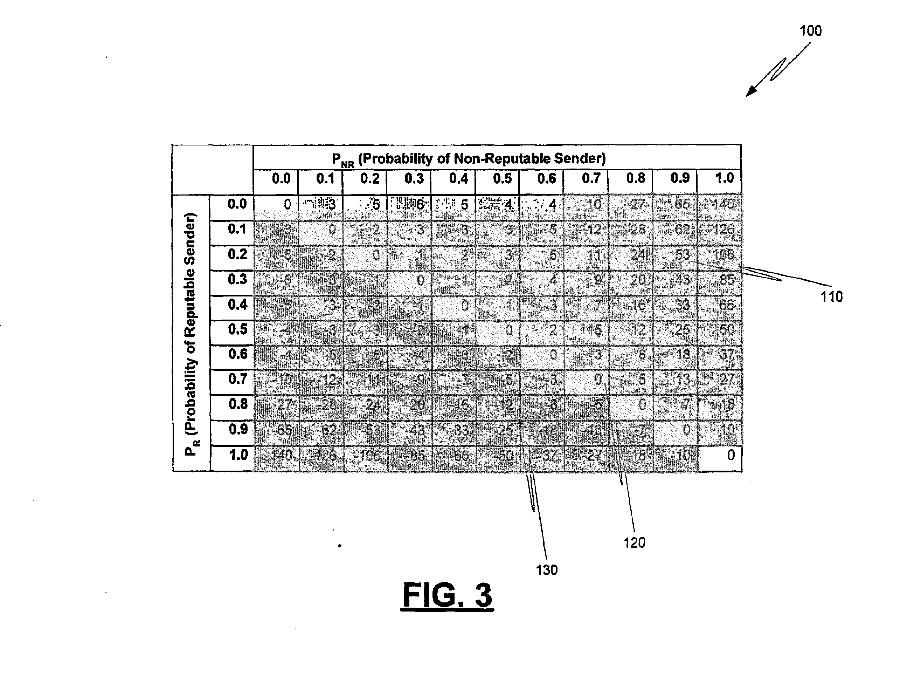

It should be understood that different functions can act as a reputation score determinator **98** and can be expressed in many different forms in addition to a functional expression. As an illustration, FIG. **3** depicts at **100** a tabular form for determining reputation scores. The table shows reputation scores produced by the above function, based on values of $P_{NR}$ and $P_R$ as they each vary between **0.0** and **1.0**. For example as shown at **110**, a reputation score of **53** is obtained for the combination of $P_{NR}$ = **0.9** and $P_R$ = **0.2**. This reputation score is a relatively high indicator that the sender should not be considered reputable. A reputation score of **0** is obtained if $P_{NR}$ and $P_R$ are the same (e.g., the reputation score is **0** if $P_{NR}$ = **0.7** and $P_R$ = **0.7** as shown at **120**). A reputation score can have a negative value to indicate that a sender is relatively reputable as determined when $P_R$ is greater than $P_{NR}$. For example, if $P_{NR}$ = **0.5** and $P_R$ = **0.8** as shown at **130,** then the reputation score is **-12.**

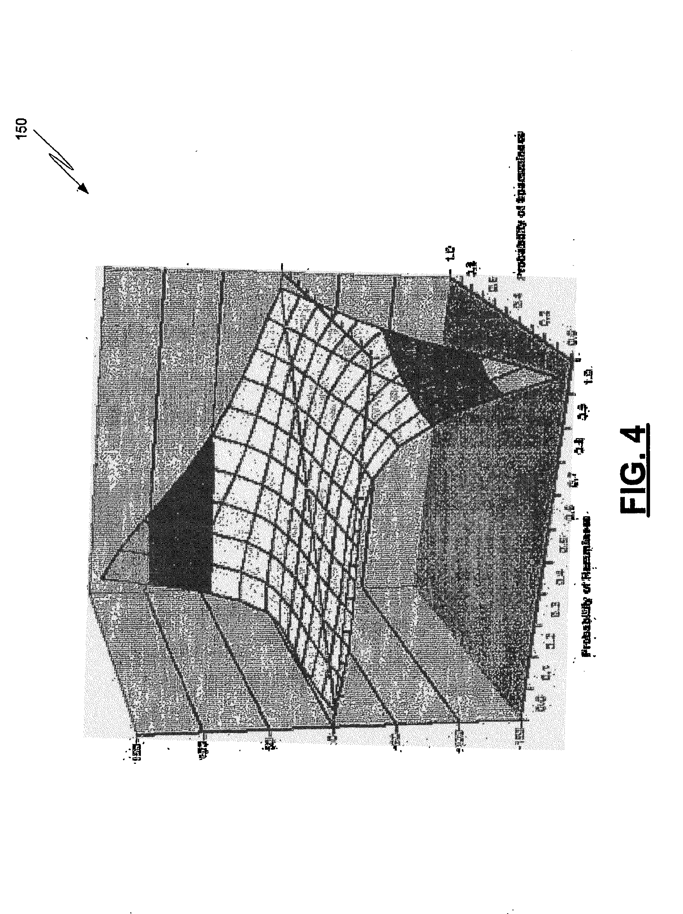

Reputation scores can be shown graphically as depicted in FIG. **4** at **150**. Graph **150** was produced by the above function, based on values of $P_{NR}$ and $P_R$. FIG. **4** illustrates reputation score determinations in the context of Spam in that the terms $P_{NR}$ and $P_R$ are used respectively as probability of hamminess and probability of spamminess as the probabilities each vary between **0.0** and **1.0.**

As shown in these examples, reputation scores can be numeric reputations that are assigned to messaging entities based on characteristics of a communication (e.g., messaging entity characteristic(s)) and/or a messaging entity's behavior. Numeric reputations can fluctuate between a continuous spectrum of reputable and non-reputable classifications. However, reputations may be non-numeric, such as by having textual, or multiple level textual categories.

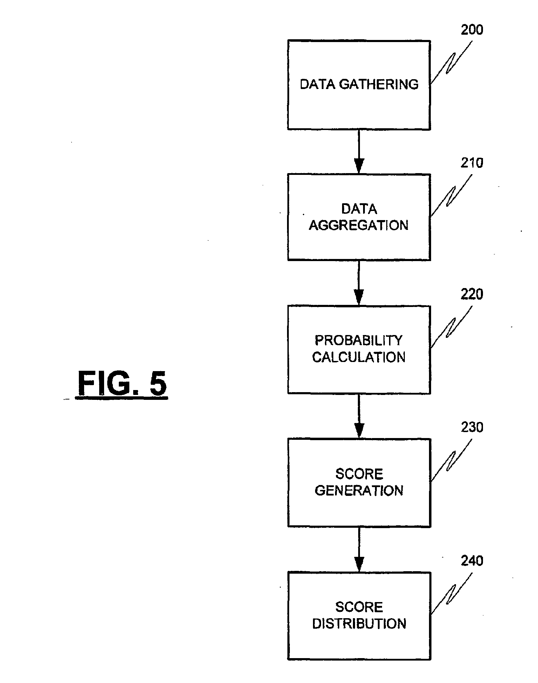

FIG. **5** depicts an operational scenario wherein a reputation system is used by a filtering system to generate reputation scores. In this operational scenario, a reputation score is computed for a particular sender (e.g., IP address, domain name, phone number, address, name, etc), from a set of input data. With reference to FIG. **5,** data is gathered at step **200** that is needed to calculate non-reputable and reputable probabilities for a sender. The data is then aggregated at step **210** and used in probability calculations at step **220**. This includes determining, for a sender, non-reputable probabilities and reputable probabilities for various selected criteria. An aggregate non-reputable probability and an aggregate reputable probability are then calculated for each sender.

After calculating an aggregate non-reputable probability and an aggregate reputable probability for each sender, a reputation score is calculated at **230** for that sender using a reputation function. At step **240,** the sender's reputation score is distributed locally and/or to one or more systems to evaluate a communication associated with the sender. As an illustration, reputation scores can be distributed to a filtering system. With the reputation score, the filtering system can choose to take an action on the transmission based on the range the sender reputation score falls into. For unreputable senders, a filtering system can choose to drop the transmission (e.g., silently), save it in a quarantine area, or flag the transmission as suspicious. In addition, a filter system can choose to apply such actions to all future transmissions from this sender for a specified period of time, without requiring new lookup queries to be made to the reputation system. For reputable senders, a filtering system can similarly apply actions to the transmissions to allow them to bypass all or certain filtering techniques that cause significant processing, network, or storage overhead for the filtering system.

It should be understood that similar to the other processing flows described herein, the processing and the order of the processing may be altered, modified and/or augmented and still achieve the desired outcome. For example, an optional addition to the step of extracting unique identifying information about the sender of the transmission would be to use sender authentication techniques to authenticate certain parts of the transmission, such as the purported sending domain name in the header of the message, to unforgeable information about the sender, such as the IP address the transmission originated from. This process can allow the filtering system to perform lookups on the reputation system by querying for information that can potentially be forged, had it not been authenticated, such as a domain name or email address. If such domain or address has a positive reputation, the transmission can be delivered directly to the recipient system bypassing all or some filtering techniques. If it has a negative reputation, the filtering system can choose to drop the transmission, save it in a quarantine area, or flag it as suspicious.

Many different types of sender authentication techniques can be used, such as the Sender Policy Framework (SPF) technique. SPF is a protocol by which domain owners publish DNS records that indicate which IP addresses are allowed to send mail on behalf of a given domain. As other non-limiting examples, SenderID or DomainKeys can be used as sender authentication techniques.

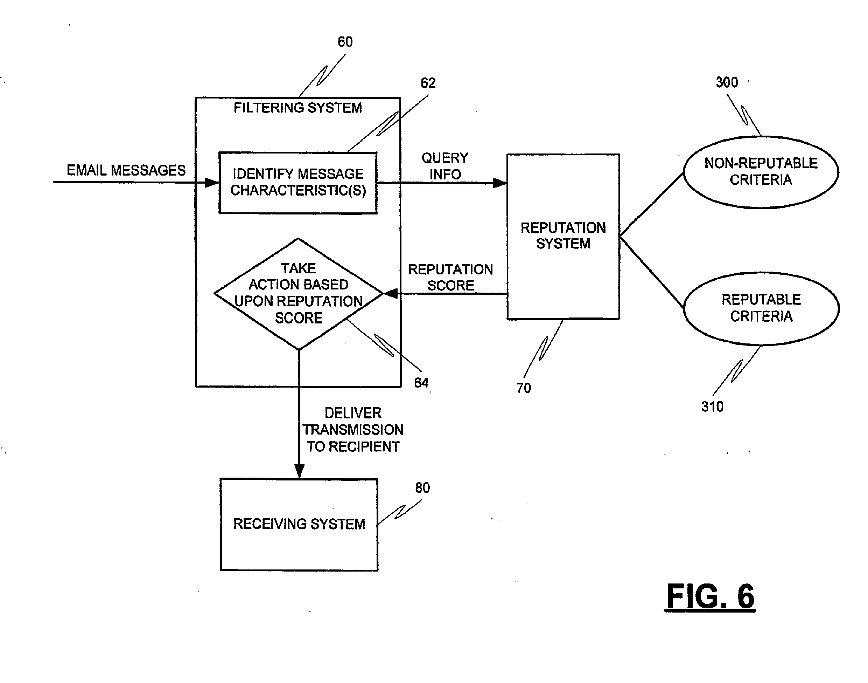

As another example, many different types of criteria may be used in processing a sender's communication. FIG. **6** depicts the use of non-reputable criteria **300** and reputable criteria **310** for use in determining reputation scores.

The non-reputable criteria **300** and reputable criteria **310** help to distinguish non-reputable senders and reputable senders. A set of criteria can change often without significantly affecting the reputation scores produced using this scoring technique. As an illustration within the context of SPAM identification, the following is a list of spamminess criteria that could be used in the reputation scoring of a message sender. The list is not intended to be exhaustive, and can be adapted to include other criteria or remove criteria based upon observed behavior.

1. *Mean Spam Score:* A sender is declared "non-reputable" if a mean spam profiler score of transmissions that it sends exceeds some threshold, W.

2. *RDNS Lookup Failure:* A sender is declared "non-reputable" if reverse domain name system (RDNS) queries for its IP addresses fail.

3. *RBL Membership:* A sender is declared "non-reputable" if it is included in a real-time blackhole list (RBL). (Note: multiple RBLs may be used. Each RBL can constitute a separate testing criterion.)

4. *Mail Volume:* A sender is declared "non-reputable" if its average (mean or median) transmission volume exceeds a threshold, *X*, where *X* is measured in transmissions over a period of time (such as, e.g., a day, week, or month). (Note: multiple average volumes over multiple time periods may be used, and each average volume can constitute a separate testing criterion.)

5. *Mail Burstiness/Sending History*: A sender is declared "non-reputable" if its average (mean or median) transmission traffic pattern burstiness (defined by the number of active sending sub-periods within a larger time period, e.g., number of active sending hours in a day or number of active sending days in a month) is less than some threshold, *Y,* where *Y* is measured in sub-periods per period. (Note: multiple average burstiness measures over multiple time periods may be used, and each average burstiness measure can constitute a separate testing criterion.)

6. *Mail Breadth:* A sender is declared "non-reputable" if its average (mean or median) transmission traffic breadth (as defined by the percentage of systems that receive transmissions from the same sender during a period of time (such as, e.g., a day, week, or month)) exceeds some threshold, *Z*. (Note: multiple average breadths over multiple time periods may be used, and each average breadth measure can constitute a separate testing criterion.)

7. *Malware Activity:* A sender is declared "non-reputable" if it is known to have delivered one or more malware codes (such as, e.g., viruses, spyware, intrusion code, etc) during a measurement period (e.g., a day, week, or month).

8. *Type of Address:* A sender is declared "non-reputable" if it is known to be dynamically assigned to dial-up or broadband dynamic host control protocol (DHCP) clients by an internet service provider (ISP).

9. ***CIDR Block Spamminess:*** A sender is declared "non-reputable" if its IP addresses are known to exist within classless inter-domain routing (CIDR) blocks that contain predominantly "non-reputable" IP addresses.

10. ***Human Feedback:*** A sender is declared "non-reputable" if it is reported to have sent undesirable transmissions by people analyzing the content and other characteristics of those transmissions.

11. ***SpamTrap Feedback:*** A sender is declared "non-reputable" if it is sending transmissions to accounts that have been declared as spamtraps and as such are not supposed to receive any legitimate transmissions.

12. ***Bounceback Feedback:*** A sender is declared "non-reputable" if it is sending bounceback transmissions or transmissions to accounts that do not exist on the destination system.

13. ***Legislation/Standards Conformance:*** A sender is declared "non-reputable" if it is not conforming to laws, regulations, and well-established standards of transmission behavior in the countries of operation of either the sender and/or the recipient of the transmissions.

14. ***Continuity of Operation:*** A sender is declared "non-reputable" if it has not operated at that sending location longer than some threshold Z.

15. ***Responsiveness to Recipient Demands:*** A sender is declared "non-reputable" if it is not responding in a reasonable timeframe to legitimate demands of the recipients to terminate their relationship with the sender to not receive any more transmissions from them.

The following is a list of "reputable" criteria that could be used in determining the "reputability" of a sender. The list is not intended to be exhaustive, and can be adapted to include other criteria or remove criteria based upon observed behavior.

1. ***Mean Spam Score:*** A sender is declared "reputable" if the mean spam profiler score of transmissions that it sends falls below some threshold, *W.*

2. ***Human Feedback:*** A sender is declared "reputable" if it is reported to have sent only legitimate transmissions by people analyzing transmission flows from that sender, in conjunction with the reputation of the organization that owns those sending stations.

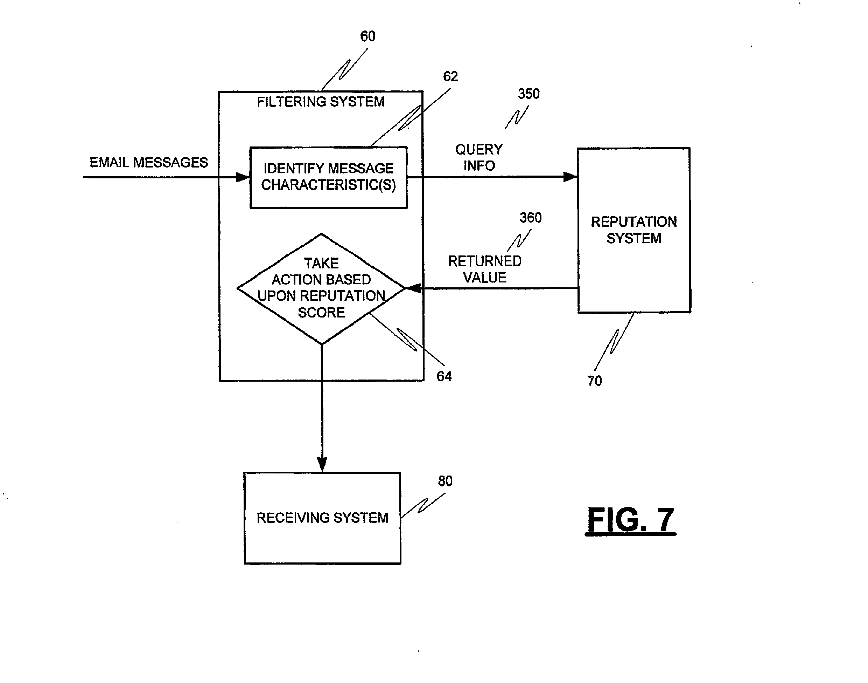

After computing a reputation grade for each sender in the universe of senders, a reputation classification can be made available via a communication protocol that can be interpreted by the queriers that make use of the reputation system (e.g., DNS, HTTP, etc). As shown in FIG. **7,** when a query **350** is issued for a sender, the reputation system can respond with a return value **360** that includes the reputation score of that sender, as well as any other relevant additional information that can be used by the querier to make the final judgment on the acceptability of the sender's transmission (e.g., age of the reputation score, input data that determined the score, etc).

An example of a communication protocol that can be used is a domain name system (DNS) server which can respond with a return value in the form of an IP address: **172.***x.y.z.* The IP address can be encoded using the formula:

$$IP = 172.\left( \frac{rep - |rep|}{2 \times rep} \right).\left( |rep| \, div \, 256 \right).\left( |rep| \, \mathrm{mod} \, 256 \right)$$

The reputation of the queried sender can be deciphered from the return value as follows:

$$rep = (-1)^{2-x} \times (256\,y + z)$$

Therefore, when *x* = **0,** the returned reputation is a positive number, and when *x* = **1**, the returned reputation is a negative number. The absolute value of the reputation is determined by the values of *y* and *z.* This encoding scheme enables the server to return via the DNS protocol reputation values within the range **[-65535, 65535].** It also leaves seven (7) unused bits, namely the seven high-order bits of *x.* These bits can be reserved for extensions to the reputation system. (For example, the age of a reputation score may be communicated back to the querier.)

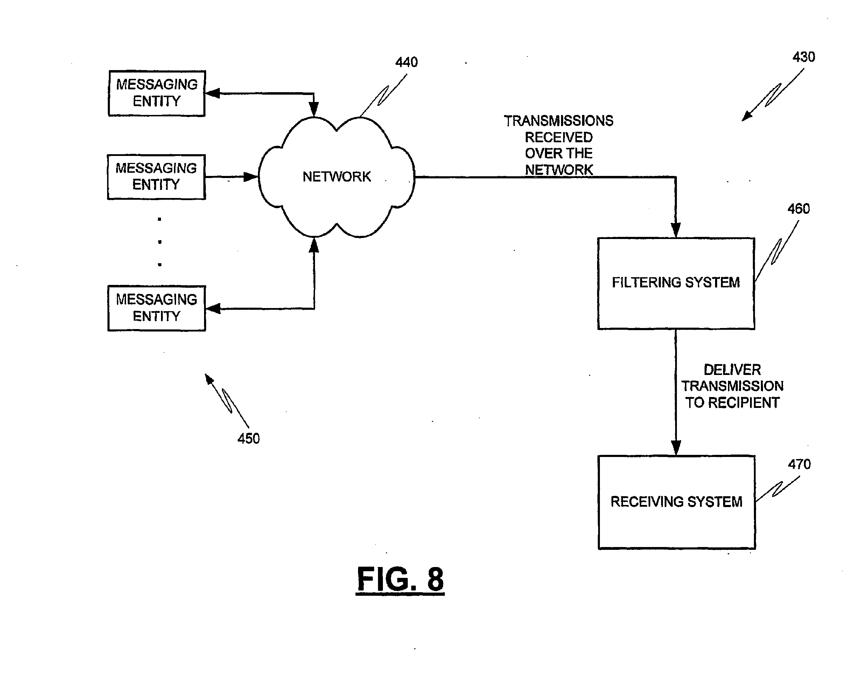

FIG. **8** depicts at **430** a system for handling transmissions received over a network **440.** The transmissions can be many different types of communications, such as electronic mail (e-mail) messages sent from one or more messaging entities **450.** The system **430** uses a filtering system **460** to help process the communications from the messaging entities **450.** The filtering system **460** examines characteristics associated with the communications from the messaging entities **450,** and based upon the examination, an action is taken with respect to the communications. For example, a communication may be determined to be legitimate and thus the communication should not be filtered by the filtering system **460** and instead provided to a receiving system **70** for delivery to the intended recipient.

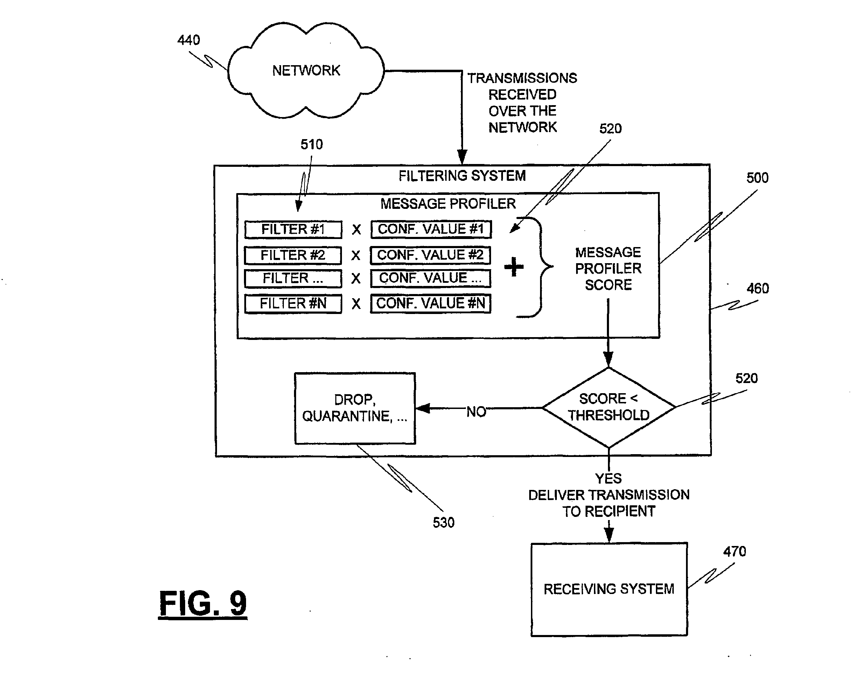

To increase the accuracy of classifying messages properly (e.g., as spam or legitimate), a filtering system **460** can be configured with a message profiler program **500** as shown in FIG. **9**. A message profiler **500** uses multiple message classification techniques or filters **510** to classify messages as shown in FIG. **9.** Example message classification techniques or filters **510** that a message profiler **500** can use include:

- **Reverse DNS (RDNS) -** a classification technique that performs a reverse domain name service (DNS) lookup, based on the message sender's IP address, to check **(1)** whether a domain exists in the DNS system for that IP address, and **(2)** if such a domain exists, whether the domain matches the domain from which the sender claims to be sending the message.

- **Real-time Black-hole Lists (RBLs) -** a classification technique that performs one or more real-time black-hole list (RBL) queries, based on the message sender's IF address, to check whether the IP address has been identified by any RBLs as an IP address that is likely to send unwanted messages.

- **Reputation Server -** a classification technique that performs one or more reputation server queries, based on the message sender's IP address and/or their domain name and other message sender characteristics, to receive a score that describes the sender's reputation.

- **Signature/fingerprinting-based Analysis (e.g., Statistical Lookup Service (SLS))** - a classification technique that computes a set of message hashes and queries a centralized statistical lookup service (SLS) to determine how frequently the computed message hashes have been seen in recent mail flow.

- **Message Header Analysis Classification Technique -** as examples, this technique can include System Defined Header analysis (SDHA), User Defined Header Analysis (UDHA), etc.

- **System Defined Header Analysis (SDHA) -** a set of classification techniques that examine a message and identify whether the message's headers exhibit certain system-defined characteristics that tend to identify likely unwanted message senders.

- **User Defined Header Analysis (UDHA) -** a set of classification techniques that examine a message and identify whether the message's headers exhibit certain user-defined characteristics that tend to identify likely unwanted message senders.

- **Sender Authentication** - a set of classification techniques that perform lookups to determine **(1)** whether the sender's claimed domain has published a record of mail servers that are authorized to send mail for that domain, and **(2)** if such a record has been published, whether the record authorizes the sender's IP address to send mail on behalf of the claimed domain. Examples of commonly used Sender Authentication techniques include Sender Policy Framework (SPF) and Sender ID.

- **Bayesian Filtering** - a statistical classification technique that computes an estimate of the joint conditional probability that a message falls into a specific category, based on the set of textual tokens (words) in the message.

- **Content Filtering** - a classification technique that searches the contents of a message for words that have been associated with certain message categories.

- **Clustering Classification** - a classification technique that based upon measuring similarity among features, communications are clustered into such groups as desired, undesired (e.g., spam), etc. The clustering is performed such that intra-group similarities are high and inter-group similarities are low.

The list is not intended to be exhaustive, and can be adapted to include other techniques as they are discovered. Some of the descriptions in the list constitute a single technique, while others constitute a combined set of many similar or closely related techniques. In cases where multiple techniques are described collectively, the message profiler **500** permits each technique to have its own confidence value.

A message profiler **500** classifies messages using a threshold-based technique. Each of the classification techniques **510** used by the message profiler **500** has an associated confidence value **520**. When a message arrives for profiling, the message profiler **500** iterates through the classification techniques and allows each technique to attempt to classify the message. The result of each classification is a decimal value in the range **[0,1].** After iterating through each classification technique, the message profiler **500** computes a score for the message using the following formula:

$$Score = \sum_{i=1}^{N} SV_i \times C_i$$

where $SV_i$ is the confidence value associated with classification technique $i$, and $C_i$ is the classification value in **[0,1]** produced by classification technique $i$.

In using classification techniques with non-linear scoring functions, the following formula can be used:

$$Score = \sum_{i=1}^{N} (SV_{1i} \times C_i + SV_{2i} \times C_i^2)$$

where $SV_{1i}$ and $SV_{2i}$ are the confidence value associated with classification technique $i$, and $C_i$ is the classification value in **[0, 1]** produced by classification technique $i$.

If the message score exceeds some specified threshold $T$ as determined at **520**, then the message is declared to belong to the first defined category. If the message score is below the threshold, it is declared to belong to the opposite category. The system can then take an appropriate action based on the threshold reached by the message score, such as quarantining the message, dropping the message (i.e., deleting the message without delivery as shown at **530),** rewriting the subject of the message to contain some specific string (e.g., "SUSPECTED SPAM"), passing on a message to the encryption engine for secure delivery, etc. The system can also allow for specifying multiple thresholds and applying a different action or actions at each threshold, which would signify the increased confidence of the message profiler **500** in the result of the classification.

The effectiveness and accuracy of a message profiler **500** is dependent on several factors, such as on the set of $SV_i$ or $SV_{1i}/SV_{2i}$ confidence values **520** associated with the classification techniques **510**. A tunable message classification configuration can be used to generate an optimized set of values along with an associated set of thresholds and actions and that can be generated periodically to keep a message profiler **500** updated with the latest protection against the frequent changes in the score distributions of classification techniques operating on the constantly changing message flow patterns. As such, a message profiler configuration includes a vector

$$(SV_1, SV_2, ..., SV_N)$$

(which represents the confidence values of all $N$ classification techniques).

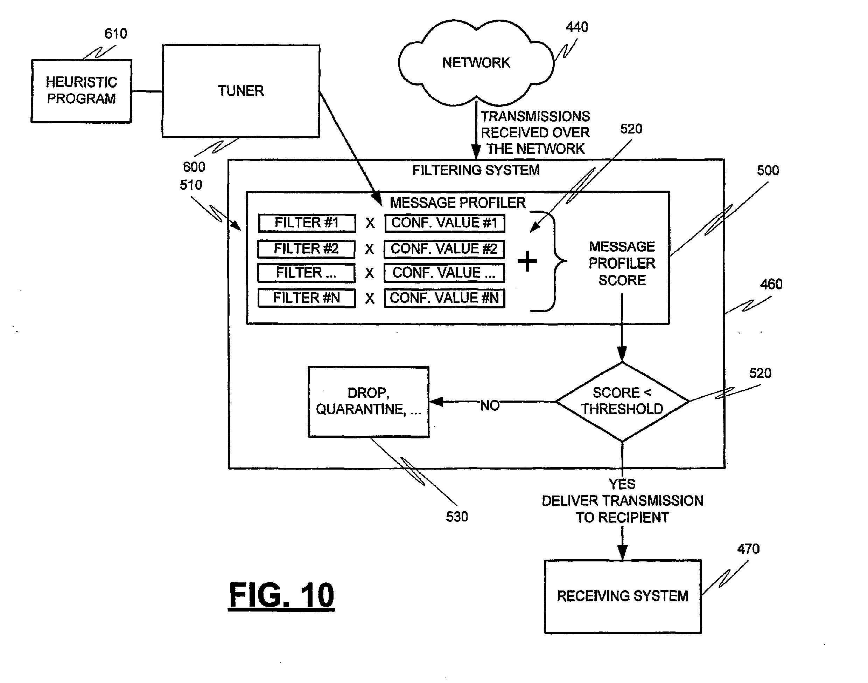

As shown in FIG. **10,** a message classification tuner program **600** can be configured to tune a message profiler **500** by performing a probabilistic search through the vector space of all possible vectors and identifying a vector that maximizes the filtering accuracy of the profiler for a pre-selected threshold. The tuner **600** can use different approaches to do this, such as by using a heuristic approach **610.**

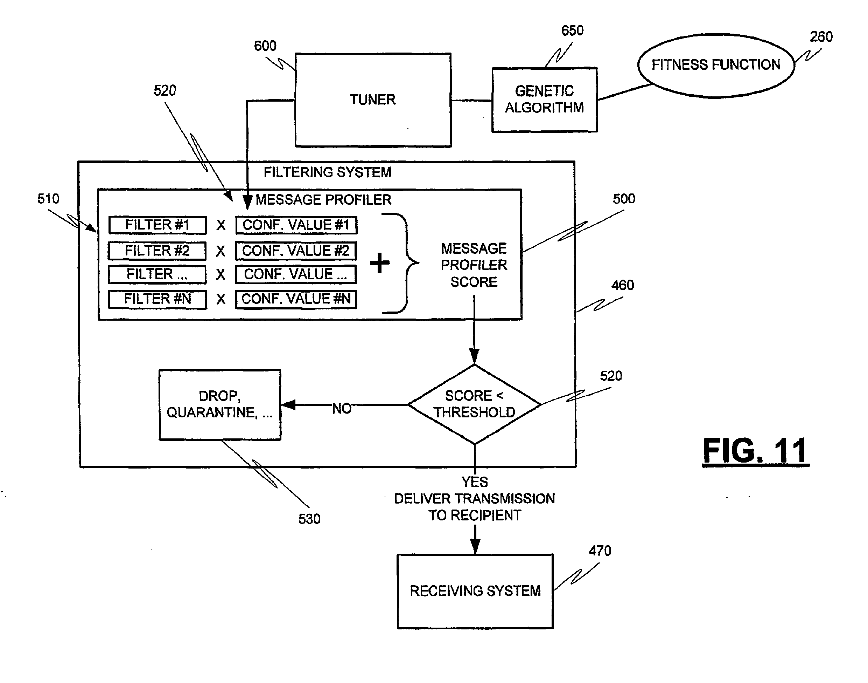

FIG. **11** illustrates the tuner using a heuristic approach known as a genetic algorithm **650** in order to perform a vector space search. The concepts underpinning a genetic algorithm come from the theory of evolution, in which genotypes (expressed via chromosomes) compete with each other via their phenotypes (expressed as biological organisms). Over time, biological evolution produces highly adapted and complex organisms that are capable of surviving in the environment for which they evolved. Similarly, a genetic algorithm searches through a vector space consisting of candidate solutions to a problem, where each candidate solution is expressed as a vector. Over many simulated generations of candidate solutions, the genetic algorithm gradually evolves towards increasingly well-adapted solutions to the problem.

The genetic algorithm's ability to evolve good solutions to a problem over time depends upon the existence of an accurate mechanism for evaluating the relative fitness level of a candidate solution compared to other candidate solutions. Thus, the genetic algorithm **650** is designed with a fitness function **660** that accurately models the fitness of candidate solutions in the actual problem domain.

Below is a fitness function **660** that could be used for optimization of a message profiler **500:**

$$Fitness = \frac{\sum \left| S_{CAT1\_MISTAKESi} - T \right|}{N_{CAT1}} + C \times \frac{\sum \left| S_{CAT2\_MIKSTAKESj} - T + 1 \right|}{N_{CAT2}}$$

The definitions of terms in the function are as follows:

$N_{CAT1}$ = number of message vectors from the overall data set that belong to the first category
$N_{CAT2}$ = number of message vectors from the overall data set that belong to the second category
$C$ = constant multiplier for misclassified messages from the second category $S_{CAT1\_MIKSTAKEi}$ = message profiler score of message vector $i$ from the first message category that has been misclassified to belong in the other category $S_{CAT2\_MISTAKEi}$ = message profiler score of message vector $i$ from the second message category that has been misclassified to belong in the other category $T$ = message profiler numeric threshold above which a message is considered to belong to the first category

The function expresses the cost associated with the mistakes that a configuration made in attempting to correctly classify message vectors in the set of pre-classified data. Accordingly, a lower fitness value is considered better for the genetic algorithm's purposes. The first term in the function expresses the cost associated with messages from the first category that have been misclassified to belong in the second (e.g., unwanted messages that have been classified as legitimate, also known as false negatives), and the second term expresses the cost associated with messages from the second category that have been misclassified to belong in the first (e.g., legitimate messages that have been classified as unwanted, also known as false positives). The summations represent the total number of points by which a configuration was wrong when attempting to classify message vectors. Intuitively, each term is essentially an expression of both the average frequency of classification errors and the average magnitude of classification errors. Note that the second term is to be multiplied by a constant, $C$. This constant (which can be set to a value of **20)** represents the relative cost of a misclassification of a message from one category in relation to misclassification of a message from the opposing category. By setting $C$ to **20,** this indicates that classification mistakes on messages from the second category are **20** times more costly than mistakes from the second category. For example, if a message profiler **500** is used for classification of wanted and unwanted mail, the first category would represent the unwanted mail (e.g., spam) and the second category would represent legitimate messages. Then the above function would deem misclassifications of legitimate messages (false positives) to be **20** times as costly as misclassification of unwanted messages (false negatives). This reflects the real-world view in the anti-spam community that false positives carry much higher risk than false negatives. If a message profiler **500** is used for policy compliance-related classification, a false positive is a message that contains sensitive information but is not labeled as such by the message profiler **500** and is, therefore, allowed to evade the policies that an organization may have chosen to apply to that particular category.

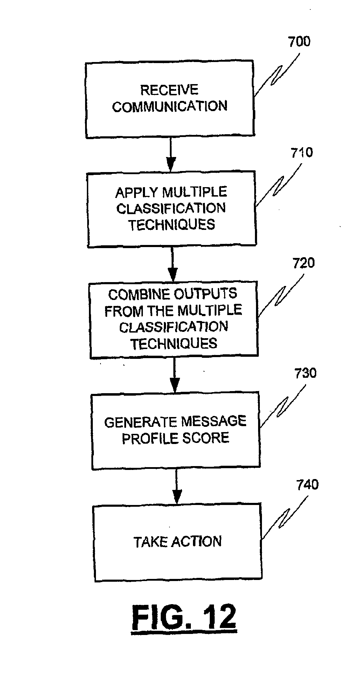

FIG. **12** depicts an operational scenario wherein a message profiler can be used. With reference to FIG. **12,** the operational scenario includes receiving at step **710** a communication that was sent over a network from a messaging entity. A plurality of message classification techniques is then used at **710** to classify the communication. Each message classification technique is associated with a confidence value which is used in generating a message classification output from the message classification technique. The output of each classification can be numeric values, textual values, or categorical values. The message classification outputs are combined at step **720** in order to generate a message profile score at step **730.** The message profile score is used at step **740** to decide what action is to be taken with respect to the communication associated with the messaging entity.

It should be understood that similar to the other processing flows described herein, the processing and the order of the processing may be altered, modified and/or augmented and still achieve the desired outcome. For example, a message profiler may be configured for an operational scenario that recognizes that there is a single technique is not capable of adequately classifying a message into two distinct categories, such as distinguishing between wanted (legitimate) and unwanted (spam, phishing, viruses, etc) message communications or determining whether a message complies with a specific organization policy, law, or regulation. In this operational scenario, such a configured message profiler can be designed to:

1. Provide a framework for combining the results of many message classification techniques into an aggregate classification (such as "unwanted" or "legitimate", "HIPPA compliant", "GLBA violation", "HR policy violation", etc), without specifying a priori which classification technique(s) will be used.
2. Decouple each classification technique's importance (expressed via its contribution towards the aggregate classification) from its classification logic, so that a technique's level of importance may be adjusted to reflect changes in its accuracy over time.

3. Provide a mechanism through which to describe the relative importance of each classification technique within the framework and the correlation of their individual accuracy, so that the framework can be adjusted to use this information to achieve very accurate rates in aggregate classification.

4. Provide a mechanism through which to discover the relative importance of each classification technique within the framework, so that the framework can be "tuned" for maximum classification accuracy in a given environment.

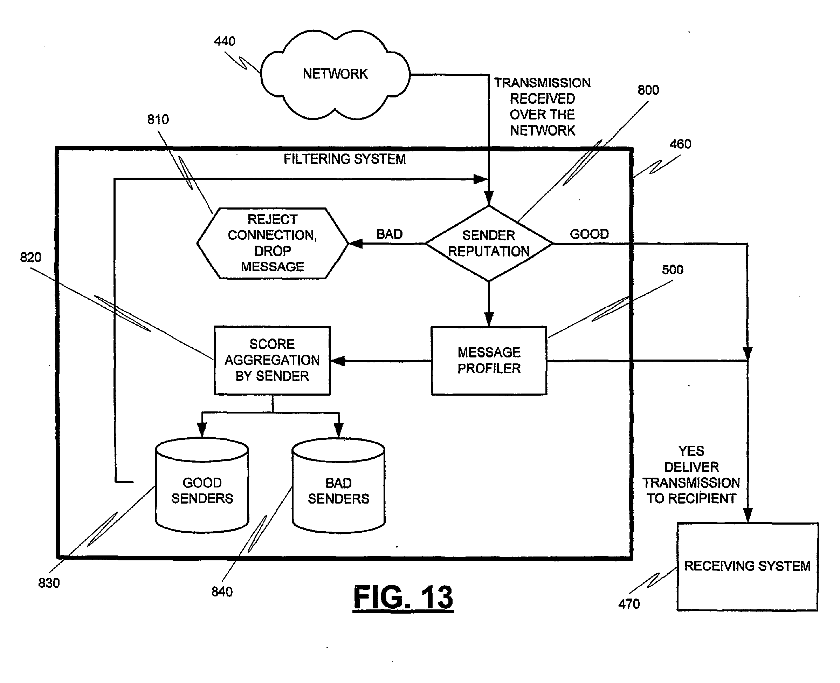

Still further, a message profiler may be configured to operate in other operational scenarios. For example, FIG. **13** depicts a message profiler that has been adapted to operate with adaptive message blocking and whitelisting. With reference to FIG. **13,** in addition to classification of individual messages, the aggregated results of a message profiler program **500** can also be used for classifying at **820** senders of messages based on the distributions of message profiler scores that their messages are receiving. If the average score of messages received from a particular sender (e.g., IP) during a specified timeframe (e.g., hour, day, week) exceeds a specified threshold $T_U$ and the score distribution has a standard deviation smaller than $ST_U$, that sender can be classified 'un-reputable' (which information is stored in data store **840**). Process **800** can then use the data from data store **840** to determine that all messages and connections originating from such a sender can be dropped at **810** without processing for the next $X$ hours. Correspondingly, if the average score is below threshold $T_L$ with a standard deviation smaller than $ST_L$, the sender can be considered legitimate (which information is stored in data store **830**) and messages from that sender can be allowed by process **800** to bypass certain filtering techniques (e.g., the filtering of message profiler **500**) that can cause significant processing, network, or storage overhead for the filtering system **460.**

A message profiler may also be used in connection with adaptive training of endo and exo-filtering systems. Using the systems and methods of sender classifier described herein, a message profiler can be used for training of the various filtering techniques that are used within the profile, as well as others that lie completely outside of it. Such techniques may include Bayesian, Support Vector Machine (SVM) and other statistical content filtering techniques, as well as signature-based techniques such as Statistical Lookup Service (SLS) and message clustering-type techniques. The training strategies for such techniques may use sets of classified legitimate and unwanted messages, which can be provided by the message profiler based on sender reputations, assigned from the aggregate scores of messages from such senders. Messages from senders classified as un-reputable can be provided to the filtering system trainer as unwanted, and the wanted messages will be taken from stream sent by the legitimate senders.

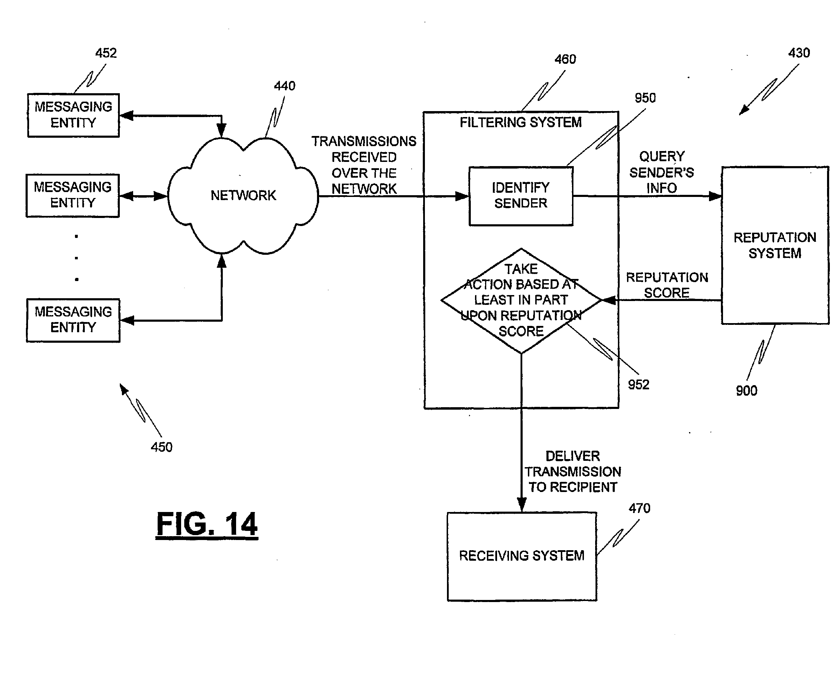

As described above, a message profiler **500** may use a reputation-based approach as one classification technique. FIG. **14** depicts at **900** a reputation system that can be used by a filtering system **460** in handling transmissions received over a network **440** from messaging entities **450**. More specifically, the filtering system **460** uses the reputation system **900** to help determine (at least in part) what filtering action (if any) should be taken upon the messaging entities' communications. For example, the communication may be determined to be from a reputable source and thus the communication should not be filtered.

The filtering system **460** identifies at **950** the sender of a received communication and provides that identification information to the reputation system **900**. The reputation system **900** evaluates the reputation of the queried sender's identity by calculating probabilities that a messaging entity exhibits certain characteristics. An overall reputation score is determined based upon the calculated probabilities and is provided to the filtering system **460.** A reputation score can be numeric, textual, or categorical in value.

The filtering system **460** determines at **952** what action should be taken for the sender's communication. The filtering system **460** could use the reputation score from the reputation system **900** as a message classification filter which is to be multiplied by its respectively tuned confidence value and then aggregated with other message classification filter results.

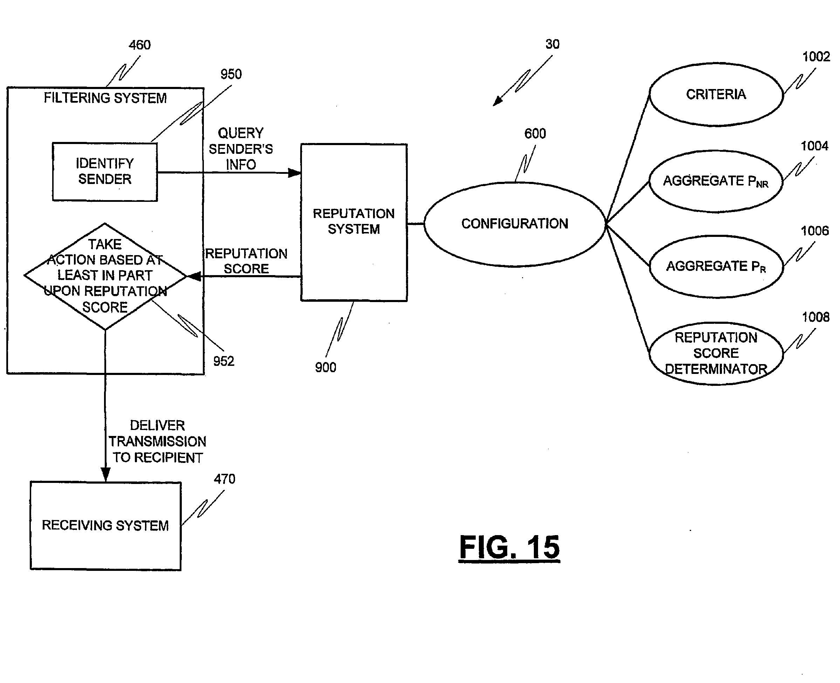

Reputation systems may be configured in many different ways in order to assist a filtering system. For example, FIG. **15** depicts the reputation system **900** that has been configured to calculate reputation scores. The system's configuration **1000** can be established by identifying a set of binary, testable criteria **1002** which appear to be strong discriminators between good and bad senders. $P(NR|C_i)$ can be defined as the probability that a sender is non-reputable, given that it conforms to quality/criterion $C_i$, and $P(R|C_i)$ can be defined as the probability that a sender is reputable, given that it conforms to quality/criterion $C_i$.

For each quality/criterion $C_i$, periodic (e.g., daily, weekly, monthly, etc.) sampling exercises can be performed to recalculate $P(NR|C_i)$. A sampling exercise may include selecting a random sample set $S$ of $N$ senders for which quality/criterion $C_i$ is known to be true. The senders in the sample are then sorted into one of the following sets: reputable ($R$), non-reputable ($NR$) or unknown ($U$). $N_R$ is the number of senders in the sample that are reputable senders, $N_{NR}$ is the number of senders that are non-reputable senders, etc. Then, $P(NR|C_i)$ and $P(R|C_i)$ are estimated using the formulas:

$$P(NR \mid C_i) = \frac{N_{NR}}{N}$$

$$P(R \mid C_i) = \frac{N_R}{N}$$

For this purpose, $N = 30$ was determined to be a large enough sample size to achieve an accurate estimate of $P(NK \mid C_i)$ and $P(R \mid C_i)$ for each quality/criterion $C_i$.

After calculating $P(NR \mid C_i)$ and $P(R \mid C_i)$ for all criteria, the computed probabilities are used to calculate an aggregate non-reputable probability 1004, $P_{NR}$, and an aggregate reputable sender probability 1006, $P_R$, for each sender in the reputation space. These probabilities can be calculated using the formulas:

$$P_{NR} = \left(1 - \prod_{i=1}^{N} \begin{cases} 1 - P(NR \mid C_i) & \text{if criterion } i \text{ applies} \\ 1 & \text{otherwise} \end{cases}\right)^{(\#of\ criteria\ that\ apply)}$$

$$P_{R} = \left(1 - \prod_{i=1}^{N} \begin{cases} 1 - P(R \mid C_i) & \text{if criterion } i \text{ applies} \\ 1 & \text{otherwise} \end{cases}\right)^{(\#of\ criteria\ that\ apply)}$$

In experimentation, the above formulas appeared to behave very well for a wide range of input criteria combinations, and in practice their behavior appears to be similar to the behavior of the formula for correctly computing naive joint conditional probabilities of "non-reputable" and "reputable" behavior for the input criteria.

After calculating $P_{NR}$ and $P_R$ for each sender, a reputation score is calculated for that sender using the following reputation function:

$$f(P_{NR}, P_R) = (c_1 + c_2 P_{NR} + c_2 P_R + c_3 P_{NR}^2 + c_3 P_R^2 + c_4 P_{NR} P_R + c_5 P_{NR}^3$$
$$+ c_5 P_R^3 + c_6 P_{NR} P_R^2 + c_6 P_{NR}^2 P_R)((P_{NR} - P_R)^3 + c_7(P_{NR} - P_R))$$

where

$c_1 = 86.50$
$c_2 = -193.45$
$c_3 = -35.19$
$c_4 = 581.09$
$c_5 = 234.81$
$c_6 = -233.18$
$c_7 = 0.51$

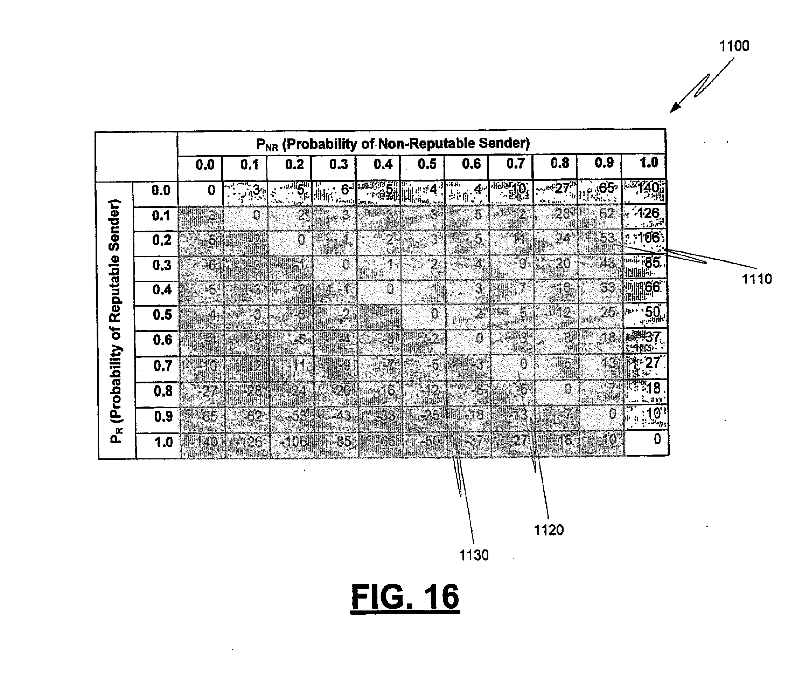

It should be understood that different functions can act as a reputation score determinator 1008 and can be expressed in many different forms in addition to a functional expression. As an illustration, FIG. 16 depicts at 1100 a tabular form for determining reputation scores. The table shows reputation scores produced by the above function, based on values of $P_{NR}$ and $P_R$ as they each vary between 0.0 and 1.0. For example as shown at 1110, a reputation score of **53** is obtained for the combination of $P_{NR}$ = **0.9** and $P_R$ = **0.2**. This reputation score is a relatively high indicator that the sender should not be considered reputable. A reputation score of **0** is obtained if $P_{NR}$ and $P_R$ are the same (e.g., the reputation score is **0** if $P_{NR}$ = **0.7** and $P_R$ = **0.7** as shown at **1120**). A reputation score can have a negative value to indicate that a sender is relatively reputable as determined when $P_R$ is greater than $P_{NR}$. For example, if $P_{NR}$ = **0.5** and $P_R$ = **0.8** as shown at **1130,** then the reputation score is **-12.**

Many different types of criteria may be used in a reputation system's processing of a sender's communication, such as using non-reputable criteria and reputable criteria to determine reputation scores. Examples of such criteria are disclosed in U.S. Provisional Application Ser. No. 60/625,507**,** entitled "CLASSIFICATION OF MESSAGING ENTITIES," filed on November **5,2004.**

The systems and methods disclosed herein are presented only by way of example and are not meant to limit the scope of the invention. Other variations of the systems and methods described above will be apparent to those skilled in the art and as such are considered to be within the scope of the invention. For example, a system and method can be configured to handle many different types of communications, such as legitimate messages or unwanted communications or communications violative of a pre-selected policy. As an illustration, an unwanted communication could include a spam or virus communication, and a pre-selected policy could include a corporate communication policy, a messaging policy, a legislation or regulatory policy, or an international communication policy.

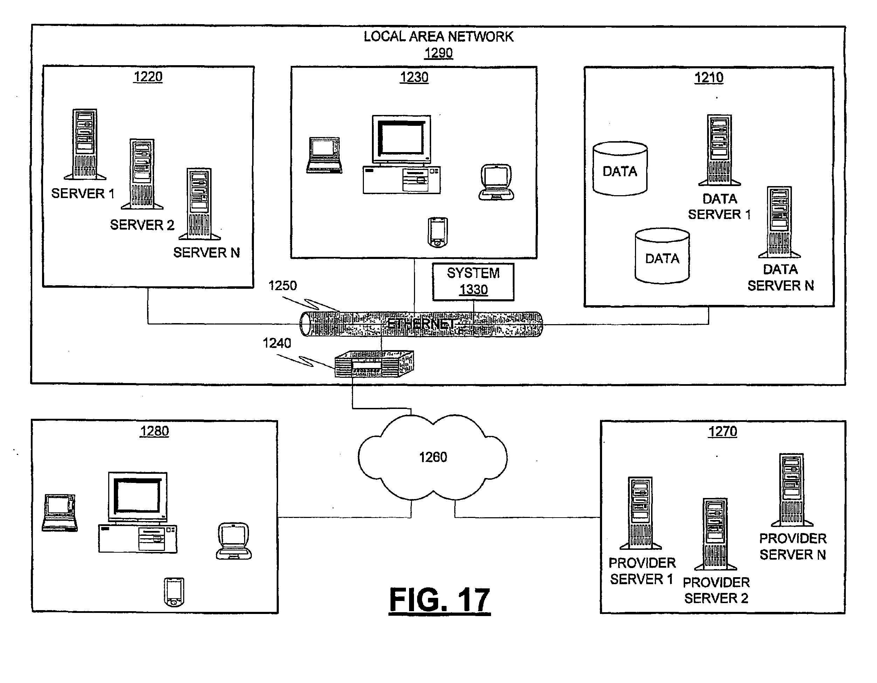

As another example of the wide scope and variations of the systems and methods disclosed herein, the systems and methods may be implemented on various types of computer architectures, such as for example on different types of networked environments. As an illustration, FIG. **17** depicts a server access architecture within which the disclosed systems and methods may be used (e.g., as shown at **1330** in FIG. **17).** The architecture in this example includes a corporation's local network **1290** and a variety of computer systems residing within the local network **1290**. These systems can include application servers **1220** such as Web servers and e-mail servers, user workstations running local clients **1230** such as e-mail readers and Web browsers, and data storage devices **1210** such as databases and network connected disks. These systems communicate with each other via a local communication network such as Ethernet **1250**. Firewall system **1240** resides between the local communication network and Internet **1260**. Connected to the Internet **1260** are a host of external servers **1270** and external clients **1280**. It should be understood that the present disclosure can any variety of network, including, but not limited to an intranet, wireless network, wide area networks, local area networks, and combinations thereof, in order to facilitate communication between components.

Local clients **1230** can access application servers **1220** and shared data storage **1210** via the local communication network. External clients **1280** can access external application servers **1270** via the Internet **1260**. In instances where a local server **1220** or a local client **1230** requires access to an external server **1270** or where an external client **1280** or an external server **1270** requires access to a local server **1220,** electronic communications in the appropriate protocol for a given application server flow through "always open" ports of firewall system **1240**.

A system **1330** as disclosed herein may be located in a hardware device or on one or more servers connected to the local communication network such as Ethernet **1280** and logically interposed between the firewall system **1240** and the local servers **1220** and clients **1230**. Application-related electronic communications attempting to enter or leave the local communications network through the firewall system **1240** are routed to the system **1330**.

In the example of FIG. **17,** system **1330** could be configured to store and process reputation data about many millions of senders as part of a threat management system. This would allow the threat management system to make better informed decisions about allowing or blocking electronic mail (e-mail).

System **1330** could be used to handle many different types of e-mail and its variety of protocols that are used for e-mail transmission, delivery and processing including SMTP and POP3. These protocols refer, respectively, to standards for communicating e-mail messages between servers and for server-client communication related to e-mail messages. These protocols are defined respectively in particular RFC's (Request for Comments) promulgated by the IETF (Internet Engineering Task Force). The SMTP protocol is defined in RFC **1221,** and the POP3 protocol is defined in RFC **1939.**

Since the inception of these standards, various needs have evolved in the field of e-mail leading to the development of further standards including enhancements or additional protocols. For instance, various enhancements have evolved to the SMTP standards leading to the evolution of extended SMTP. Examples of extensions may be seen in **(1)** RFC **1869** that defines a framework for extending the SMTP service by defining a means whereby a server SMTP can inform a client SMTP as to the service extensions it supports and in **(2)** RFC **1891** that defines an extension to the SMTP service, which allows an SMTP client to specify (a) that delivery status notifications (DSNs) should be generated under certain conditions, (b) whether such notifications should return the contents of the message, and (c) additional information, to be returned with a DSN, that allows the sender to identify both the recipient(s) for which the DSN was issued, and the transaction in which the original message was sent.

In addition, the IMAP protocol has evolved as an alternative to POP3 that supports more advanced interactions between e-mail servers and clients. This protocol is described in RFC **2060.**

Other communication mechanisms are also widely used over networks. These communication mechanisms include, but are not limited to, Voice Over IP (VoIP) and Instant Messaging. VoIP is used in IP telephony to provide a set of facilities for managing the delivery of voice information using the Internet Protocol (IP). Instant Messaging is a type of communication involving a client which hooks up to an instant messaging service that delivers communications (e.g., conversations) in realtime.

As the Internet has become more widely used, it has also created new troubles for users. In particular, the amount of spam received by individual users has increased dramatically in the recent past. Spam, as used in this specification, refers to any communication receipt of which is either unsolicited or not desired by its recipient. A system and method can be configured as disclosed herein to address these types of unsolicited or undesired communications. This can be helpful in that e-mail spamming consumes corporate resources and impacts productivity.

It is further noted that the systems and methods disclosed herein may use data signals conveyed via networks (e.g., local area network, wide area network, internet, etc.), fiber optic medium, carrier waves, wireless networks, etc. for communication with one or more data processing devices. The data signals can carry any or all of the data disclosed herein that is provided to or from a device.

Additionally, a methods and systems described herein may be implemented on many different types of processing devices by program code comprising program instructions that are executable by one or more processors. The software program instructions may include source code, object code, machine code, or any other stored data that is operable to cause a processing system to perform methods described herein.

The systems' and methods' data (e.g., associations, mappings, etc.) may be stored and implemented in one or more different types of computer-implemented ways, such as different types of storage devices and programming constructs (e.g., data stores, RAM, ROM, Flash memory, flat files, databases, programming data structures, programming variables, IF-THEN (or similar type) statement constructs, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, etc.) that contain instructions for use in execution by a processor to perform the methods' operations and implement the systems described herein.

The computer components, software modules, functions and data structures described herein may be connected directly or indirectly to each other in order to allow the flow of data needed for their operations. It is also noted that software instructions or a module can be implemented for example as a subroutine unit of code, or as a software function unit of code, or as an object (as in an object-oriented paradigm), or as an applet, or in a computer script language, or as another type of computer code or firmware. The software components and/or functionality may be located on a single device or distributed across multiple devices depending upon the situation at hand.

It should be understood that as used in the description herein and throughout the claims that follow, the meaning of "a," "an," and "the" includes plural reference unless the context clearly dictates otherwise. Also, as used in the description herein and throughout the claims that follow, the meaning of "in" includes "in" and "on" unless the context clearly dictates otherwise. Finally, as used in the description herein and throughout the claims that follow, the meanings of "and" and "or" include both the conjunctive and disjunctive and may be used interchangeably unless the context clearly dictates otherwise; the phrase "exclusive or" may be used to indicate situation where only the disjunctive meaning may apply.

**Claims**

1. A method for operation upon one or more data processors to assign a reputation to a messaging entity (50, 52), comprising:

   receiving (200) data (350) that identifies one or more characteristics related to a messaging entity's communication;
   determining (230) a reputation score (360) based upon the received identification data by calculating (220) probabilities that the identified one or more message characteristics exhibit one or more criteria (92);
   wherein the determined reputation score (360) is indicative of reputation of the messaging entity (50, 52);
   wherein the determined reputation score (360) is used in deciding what action is to be taken with respect to a communication associated with the messaging entity (50, 52).

2. The method of claim 1, wherein the determined reputation score (360) is distributed (240) to one or more computer systems for use in filtering transmissions.

3. The method of claim 1, wherein the determined reputation score (360) is locally distributed (240) to a program for use in filtering transmissions.

4. The method of claim 1, wherein the determining (230) the reputation score (360) by calculating (220) probabilities that the identified one or more message characteristics exhibit one or more criteria (92) comprises:

calculating (220), for each criterion (92), a non-reputable probability, as a probability that the messaging entity (50, 52) is non-reputable given that it confirms the criterion;
calculating (220), for each criterion (92), a reputable probability, as a probability that the messaging entity (50, 52) is reputable given that it confirms the criterion;
calculating (220) an aggregate non-reputable probability (94) by use of the non-reputable probabilities calculated for each criterion (92);
calculating (220) an aggregate reputable probability (96) by use of the reputable probabilities calculated for each criterion (92); and
calculating (230) the reputation score (360) by use of the aggregate non-reputable probability (94) and the aggregate reputable probability (96).

5. The method of claim 1 further comprising: identifying a set of criteria (92) for use in discriminating between reputable and non-reputable classifications;
wherein the criteria (92) include non-reputable criteria (300) and reputable criteria (310);
using statistical sampling to estimate a conditional probability that a messaging entity (50, 52) displays each criteria (92);
computing (230) a reputation for each messaging entity (50, 52), wherein the computing step comprises:

calculating (220) probability (96) that a messaging entity deserves a reputable reputation by computing an estimate of joint conditional probability (96) that the messaging entity (50, 52) is reputable, given the set of criteria (92) that the messaging entity (50, 52) exhibits or conforms to and the individual conditional probability that the messaging entity (50, 52) exhibits or conforms to each such criteria (92) is actually a reputable messaging entity (50, 52);
calculating (220) the probability (94) that the messaging entity (50, 52) deserves a negative reputation by computing an estimate of joint conditional probability (94) that the messaging entity (50, 52) is non-reputable, given the set of criteria (92) that the messaging entity (50, 52) exhibits or conforms to and the individual conditional probability that the messaging entity (50, 52) exhibits or conforms to each such criteria (92) is actually a non-reputable messaging entity (50, 52);
computing (230) a reputation for a messaging entity (50, 52) by applying a function to the probabilities (94, 96).

6. The method of claim 5, wherein the reputation of each messaging entity (50, 52) is encoded within the form of a 32-bit, dotted decimal IP address; said method further comprising:

creating a domain name server, DNS, zone comprising the reputations of all messaging entities (50, 52) in a universe of messaging entities (50, 52); and
distributing reputations of messaging entities (50, 52), via the DNS protocol, to one or more computer systems that make use of the reputations for their work.

7. The method of claim 5, wherein the set of criteria (92) are metrics selected from the group: a mean Spam Profiler score; a reverse domain name server lookup failure; membership on one or more real-time blacklists, RBLs; mail volume; mail burstiness; mail breadth; a geographic location; malware activity; a type of address; a classless inter-domain routing, CIDR, block comprising a number of internet protocol addresses identified to send spam; rate of user complaints; rate of honeypot detections; rate of undeliverable transmissions, identified conformance with laws, regulations, and well-established standards of transmission behavior; continuity of operation; responsiveness to recipient demands; and combinations thereof.

8. The method of claim 5, wherein the function used to encode the messaging entity (50, 52) reputation within a 32-bit dotted decimal IP address is:

$$IP = 172.\left(\frac{rep - |rep|}{2 \times rep}\right).\left(|rep| \, div \, 256\right).\left(|rep| \, mod \, 256\right).$$

**9.** A reputation system (70) for assigning a reputation to a messaging entity (50, 52), the reputation system (70) being configured to execute a method according to anyone of claims 1 to 8.

**10.** A method of performing transmission filtering utilizing reputation scores (360) of transmission sender (50, 52), the method comprising:

identifying (62) at least one characteristic about a transmission from a sender (50, 52);
performing a real-time query (350) to a reputation system (70) that includes the transmission characteristic;
receiving (240) from the reputation system (70) a score (360) representing reputation related to the transmission from the sender (50, 52), wherein the score (360) representing reputation related to the transmission from the sender (50, 52) is a score determined by executing a method according to anyone of claims 1 to 9;
performing (64) an action on the transmission from the sender (50, 52) corresponding to the score range of the sender's reputation.

**11.** The method of claim 10, wherein the action includes at least one of the following actions:

rejecting all further transmissions from that sender (50, 52) for a preset period of time or number of transmissions;
silently dropping all further transmissions from that sender (50, 52) for a preset period of time or number of transmissions;
quarantining all further transmissions from that sender (50, 52) for a preset period of time or number of transmissions;
bypassing certain filtering tests for all further transmissions from that sender (50, 52) for a preset period of time or number of transmissions.

**12.** The method of claim 10, wherein the step of identifying (62) at least one characteristic includes extracting unique identifying information about the transmission, or authenticating unique identifying information about the transmission, or combinations thereof.

**13.** A filtering system (60, 460) for performing transmission filtering utilizing reputation scores (360) of transmission sender (50, 52), the filtering system (60, 460) being configured to execute a method according to anyone of claims 10 to 12.

**Patentansprüche**

**1.** Verfahren zum Betrieb in einem oder mehreren Datenprozessoren, um einer Mitteilungsübermittlungsentität (50, 52) eine Akzeptierbarkeit zuzuweisen, das Folgendes umfasst:

Empfangen (200) von Daten (350), die ein oder mehrere Kennzeichen identifizieren, die sich auf eine Kommunikation der Mitteilungsübermittlungsentität beziehen;
Bestimmen (230) einer Akzeptierbarkeitspunktzahl (360) auf der Grundlage der empfangenen Identifikationsdaten durch Berechnen (220) von Wahrscheinlichkeiten, dass die oder die mehreren identifizierten Mitteilungsübermittlungseigenschaften ein oder mehrere Kriterien (92) aufweisen;
wobei die bestimmte Akzeptierbarkeitspunktzahl (360) die Akzeptierbarkeit der Mitteilungsübermittlungsentität (50, 52) anzeigt;
wobei die bestimmte Akzeptierbarkeitspunktzahl (360) verwendet wird, um zu entscheiden, welche Maßnahme in Bezug auf eine Kommunikation, die der Mitteilungsübermittlungsentität (50, 52) zugeordnet ist, ergriffen wird.

**2.** Verfahren nach Anspruch 1, wobei die bestimmte Akzeptierbarkeitspunktzahl (360) an ein oder mehrere Computersysteme zur Verwendung in Filterungsübertragungen verteilt wird (240).

**3.** Verfahren nach Anspruch 1, wobei die bestimmte Akzeptierbarkeitspunktzahl (360) an ein Programm zur Verwendung in Filterungsübertragungen lokal verteilt wird (240).

4. Verfahren nach Anspruch 1, wobei das Bestimmen (230) der Akzeptierbarkeitspunktzahl (360) durch Berechnen (220) von Wahrscheinlichkeiten, dass die eine oder die mehreren identifizierten Mitteilungsübermittlungseigenschaften ein oder mehrere Kriterien (92) aufweisen, Folgendes umfasst:

Berechnen (220) einer nicht akzeptierbaren Wahrscheinlichkeit für jedes Kriterium (92) als eine Wahrscheinlichkeit, dass die Mitteilungsübermittlungsentität (50, 52) nicht akzeptierbar ist, vorausgesetzt, dass sie das Kriterium bestätigt;
Berechnen (220) einer akzeptierbaren Wahrscheinlichkeit für jedes Kriterium (92) als eine Wahrscheinlichkeit, dass die Mitteilungsübermittlungsentität (50, 52) akzeptierbar ist, vorausgesetzt, dass sie das Kriterium bestätigt;
Berechnen (220) einer gesamten nicht akzeptierbaren Wahrscheinlichkeit (94) durch Verwenden der nicht akzeptierbaren Wahrscheinlichkeiten, die für jedes Kriterium (92) berechnet wurden;
Berechnen (220) einer gesamten akzeptierbaren Wahrscheinlichkeit (96) durch Verwenden der akzeptierbaren Wahrscheinlichkeiten, die für jedes Kriterium (92) berechnet wurden, und
Berechnen (230) der Akzeptierbarkeitspunktzahl (360) durch Verwenden der gesamten nicht akzeptierbaren Wahrscheinlichkeit (94) und der gesamten akzeptierbaren Wahrscheinlichkeit (96).

5. Verfahren nach Anspruch 1, das ferner Folgendes umfasst: Identifizieren einer Gruppe von Kriterien (92) zur Verwendung beim Unterscheiden zwischen akzeptierbaren und nicht akzeptierbaren Einteilungen;
wobei die Kriterien (92) nicht akzeptierbare Kriterien (300) und akzeptierbare Kriterien (310) aufweisen;
Verwenden von statistischer Stichprobenerhebung, um eine bedingte Wahrscheinlichkeit zu schätzen, dass eine Mitteilungsübermittlungsentität (50, 52) jedes Kriterium (92) anzeigt;
Berechnen (230) einer Akzeptierbarkeit für jede Mitteilungsübermittlungsentität (50, 52), wobei der Berechnungsschritt Folgendes umfasst:

Berechnen (220) einer Wahrscheinlichkeit (96), dass eine Mitteilungsübermittlungsentität eine akzeptierbare Akzeptierbarkeit verdient, durch Berechnen eines Schätzers einer gemeinsamen bedingten Wahrscheinlichkeit (96), dass die Mitteilungsübermittlungsentität (50, 52) akzeptierbar ist, vorausgesetzt, dass die Gruppe der Kriterien (92), die die Mitteilungsübermittlungsentität (50, 52) aufweist oder ihr genügt, und die individuelle bedingte Wahrscheinlichkeit, dass die Mitteilungsübermittlungsentität (50, 52) jedes der Kriterien (92) aufweist oder ihnen genügt, tatsächlich eine akzeptierbare Mitteilungsübermittlungsentität (50, 52) ist;
Berechnen (220) der Wahrscheinlichkeit (94), dass eine Mitteilungsübermittlungsentität (50, 52) eine negative Akzeptierbarkeit verdient, durch Berechnen eines Schätzers einer gemeinsamen bedingten Wahrscheinlichkeit (94), dass die Mitteilungsübermittlungsentität (50, 52) nicht akzeptierbar ist, vorausgesetzt, dass die Gruppe der Kriterien (92), die die Mitteilungsübermittlungsentität (50, 52) aufweist oder ihr genügt, und die individuelle bedingte Wahrscheinlichkeit, dass die Mitteilungsübermittlungsentität (50, 52) jedes der Kriterien (92) aufweist oder ihnen genügt, tatsächlich eine nicht akzeptierbare Mitteilungsübermittlungsentität (50, 52) ist;
Berechnen (230) einer Akzeptierbarkeit für eine Mitteilungsübermittlungsentität (50, 52) durch Anwenden einer Funktion auf die Wahrscheinlichkeiten (94, 96).

6. Verfahren nach Anspruch 5, wobei die Akzeptierbarkeit jeder Mitteilungsübermittlungsentität (50, 52) innerhalb der Form einer punktierten dezimalen 32-Bit-IP-Adresse codiert ist; wobei das Verfahren ferner Folgendes umfasst:

Erzeugen einer Domain-Name-Serverzone, DNS-Zone, die die Akzeptierbarkeiten aller Mitteilungsübermittlungsentitäten (50, 52) in einem Universum der Mitteilungsübermittlungsentitäten (50, 52) umfasst, und
Verteilen der Akzeptierbarkeiten der Mitteilungsübermittlungsentitäten (50, 52) über das DNS-Protokoll an ein oder mehrere Computersysteme, die die Akzeptierbarkeiten für ihre Arbeit verwenden.

7. Verfahren nach Anspruch 5, wobei die Gruppe der Kriterien (92) Metriken sind, die aus der folgenden Gruppe ausgewählt sind: eine gemittelte Spam-Profiler-Punktzahl; ein umgekehrter Domain-Name-Server-Nachschlagefehler; Zugehörigkeit zu einer oder mehreren schwarzen Listen in Echtzeit, RBLs; Nachrichtenvolumen; Ruckartigkeit der Nachrichten; Nachrichtenbreite; ein geographischer Ort; Schadprogrammaktivität; ein Block zum klassenlosen Interdomain-Routing, CIDR, der eine Anzahl von Internet-Protokoll-Adressen, die identifiziert sind, unerwünschte E-Mails zu senden, umfasst; Rate der Anwenderbeschwerden; Rate der Honigtopf-Detektionen; Rate der nicht zustellbaren Übertragungen; identifizierte Übereinstimmung mit Gesetzen, Vorschriften und gängigen Normen des Übertragungsverhaltens; Kontinuität des Betriebs; Reaktionsfähigkeit auf Anforderungen des Empfängers und Kombinationen davon.

8. Verfahren nach Anspruch 5, wobei die Funktion, die verwendet wird, um die Akzeptierbarkeit der Mitteilungsübermittlungsentität (50, 52) innerhalb der punktierten dezimalen 32-Bit-IP-Adresse zu codieren, Folgende ist:

$$IP = 172 . \left( \frac{rep - \lfloor rep \rfloor}{2 \times rep} \right) . (\lfloor rep \rfloor \, \mathrm{div} \, 256) . (\lfloor rep \rfloor \, \mathrm{mod} \, 256).$$

9. Akzeptierbarkeitssystem (70) zum Zuweisen einer Akzeptierbarkeit an eine Mitteilungsübermittlungsentität (50, 52), wobei das Akzeptierbarkeitssystem (70) konfiguriert ist, ein Verfahren nach einem der Ansprüche 1 bis 8 auszuführen.

10. Verfahren zum Durchführen der Übertragungsfilterung, die Akzeptierbarkeitspunktzahlen (360) der Übertragungssender (50, 52) verwendet, wobei das Verfahren Folgendes umfasst:

Identifizieren (62) von mindestens einem Kennzeichen über eine Übertragung von einem Sender (50, 52);
Durchführen einer Echtzeitabfrage (350) an ein Akzeptierbarkeitssystem (70), das die Übertragungskennzeichen aufweist;
Empfangen (240) einer Punktzahl (360) von dem Akzeptierbarkeitssystem (70), die eine Akzeptierbarkeit darstellt, die sich auf die Übertragung von dem Sender (50, 52) bezieht, wobei die Punktzahl (360), die eine Akzeptierbarkeit darstellt, die sich auf die Übertragung von dem Sender (50, 52) bezieht, eine Punktzahl ist, die durch das Ausführen eines Verfahrens nach einem der Ansprüche 1 bis 9 bestimmt wird;
Durchführen (64) einer Maßnahme auf die Übertragung von dem Sender (50, 52), die dem Punktzahlbereich der Akzeptierbarkeit des Senders entspricht.

11. Verfahren nach Anspruch 10, wobei die Maßnahme mindestens eine der folgenden Maßnahmen aufweist:

Abweisen aller weiteren Übertragungen von diesem Sender (50, 52) für eine voreingestellte Zeitdauer oder Anzahl von Übertragungen;
stilles Fallenlassen aller weiteren Übertragungen von diesem Sender (50, 52) für eine voreingestellte Zeitdauer oder Anzahl von Übertragungen;
unter Quarantäne Stellen aller weiteren Übertragungen von diesem Sender (50, 52) für eine voreingestellte Zeitdauer oder Anzahl von Übertragungen;
Umgehen bestimmter Filterungsteste für alle weiteren Übertragungen von diesem Sender (50, 52) für eine voreingestellte Zeitdauer oder Anzahl von Übertragungen.

12. Verfahren nach Anspruch 10, wobei der Schritt des Identifizierens (62) von mindestens einem Kennzeichen das Extrahieren einzigartiger Identifizierungsinformationen über die Übertragung oder das Authentifizieren einzigartiger Identifizierungsinformationen über die Übertragung oder Kombinationen davon beinhaltet.

13. Filterungssystem (60, 460) zum Durchführen einer Übertragungsfilterung, die Akzeptierbarkeitspunktzahlen (360) eines Übertragungssenders (50, 52) verwendet, wobei das Filterungssystem (60, 460) konfiguriert ist, ein Verfahren nach einem der Ansprüche 10 bis 12 auszuführen.

**Revendications**

1. Procédé d'exploitation d'un ou plusieurs processeurs de données pour attribuer une fiabilité à une entité de messagerie (50, 52), comprenant :

la réception (200) de données (350) qui identifient une ou plusieurs caractéristiques relatives à la communication d'une entité de messagerie ;
la détermination (230) d'un score de fiabilité (360) basé sur les données d'identification reçues en calculant (220) des probabilités que les une ou plusieurs caractéristiques de message identifiées présentent un ou plusieurs critères (92) ;
dans lequel le score de fiabilité déterminé (360) est indicatif de la fiabilité de l'entité de messagerie (50, 52) ;
dans lequel le score de fiabilité déterminé (360) est utilisé pour décider de la mesure à prendre relativement à une communication associée à l'entité de messagerie (50, 52).

**2.** Procédé selon la revendication 1, dans lequel le score de fiabilité déterminé (360) est distribué (240) à un ou plusieurs systèmes informatiques en vue de son utilisation dans le filtrage de transmissions.

**3.** Procédé selon la revendication 1, dans lequel le score de fiabilité déterminé (360) est distribué localement (240) à un programme en vue de son utilisation dans le filtrage de transmissions.

**4.** Procédé selon la revendication 1, dans lequel la détermination (230) du score de fiabilité (360) en calculant (220) les probabilités que les une ou plusieurs caractéristiques de message présentent un ou plusieurs critères (92) comprend ;
le calcul (220), pour chaque critère (92), d'une probabilité de non-fiabilité, comme une probabilité que l'entité de messagerie (50, 52) n'est pas fiable puisqu'elle confirme le critère ; le calcul (220), pour chaque critère (92), d'une probabilité de fiabilité, comme une probabilité que l'entité de messagerie (50, 52) est fiable puisqu'elle confirme le critère ;
le calcul (220) d'une probabilité de non-fiabilité globale (94) en utilisant les probabilités de non-fiabilité calculées pour chaque critère (92) ;
le calcul (220) d'une probabilité de fiabilité globale (96) en utilisant les probabilités de fiabilité calculées pour chaque critère (92) ; et le calcul (230) du score de fiabilité (360) en utilisant la probabilité de non-fiabilité globale (94) et la probabilité de fiabilité globale (96).

**5.** Procédé selon la revendication 1, comprenant en outre : l'identification d'un ensemble de critères (92) destinés à être utilisés dans la discrimination entre les classifications de fiabilité et de non-fiabilité ;
dans lequel les critères (92) comportent des critères de non-fiabilité (300) et des critères de fiabilité (310) ;
l'utilisation d'un échantillonnage statistique pour estimer une probabilité conditionnelle qu'une entité de messagerie (50, 52) affiche chaque critère (92) ;
le calcul (230) d'une fiabilité pour chaque entité de messagerie (50, 52), l'étape de calcul comprenant :

le calcul (220) d'une probabilité (96) qu'une entité de messagerie mérite d'être qualifiée de fiable en calculant une estimation d'une probabilité conditionnelle jointe (96) que l'entité de messagerie (50, 52) est fiable, étant donné l'ensemble de critères (92) que l'entité de messagerie (50, 52) présente ou auquel elle se conforme et la probabilité conditionnelle individuelle que l'entité de messagerie (50, 52) présente ou se conforme à de tels critères (92) est en fait une entité de messagerie fiable (50, 52) ;
le calcul (220) de la probabilité (94) que l'entité de messagerie (50, 52) mérite d'être qualifiée de non fiable en calculant une estimation d'une probabilité conditionnelle jointe (94) que l'entité de messagerie (50, 52) est non fiable, étant donné l'ensemble de critères (92) que l'entité de messagerie (50, 52) présente ou auquel elle se conforme et la probabilité conditionnelle individuelle que l'entité de messagerie (50, 52) présente ou se conforme à chaque tel critère (92) est en fait une entité de messagerie non fiable (50, 52) ;
le calcul (230) d'une fiabilité d'une entité de messagerie (50, 52) en appliquant une fonction aux probabilités (94, 96).

**6.** Procédé selon la revendication 5, dans lequel la fiabilité de chaque entité de messagerie (50, 52) est codée sous forme d'adresse IP décimale à point de 32 bits ; ledit procédé comprenant en outre :

la création d'une zone de serveur de nom de domaine (DNS) comprenant les fiabilités de toutes les entités de messagerie (50, 52) dans un univers d'entités de messagerie (50, 52) ; et
la distribution de fiabilités d'entités de messagerie (50, 52) selon le protocole DNS, à un ou plusieurs systèmes informatiques qui utilisent les fiabilités pour leur travail.

**7.** Procédé selon la revendication 5, dans lequel l'ensemble de critères (92) est constitué de métriques sélectionnées dans le groupe suivant :

score de Profileur de Pourriel moyen ; erreur de consultation de serveur de nom de domaine inverse ; adhésion à une ou plusieurs listes noires en temps réel, RBL ; volume de courrier ; nature sporadique du courrier ; ampleur du courrier ; emplacement géographique ; activité de maliciel ; type d'adresse ; bloc de routage interdomaines sans classe, CIDR, comprenant un nombre d'adresses de protocole Internet identifiées comme envoyant un pourriel ; taux de plaintes d'utilisateurs ; taux de détections de honeypots ; taux de transmissions non délivrables, conformité identifiée avec les lois, réglementations, et normes réputées de comportement de transmission ; continuité de fonctionnement ; rapidité de réponse aux demandes des destinataires ; et des combinaisons de celles-ci.

**8.** Procédé selon la revendication 5, dans lequel la fonction utilisée pour coder la fiabilité de l'entité de messagerie (50, 52) dans une adresse IP décimale à point de 32 bits est :

$$IP = 172.\left(\frac{rep - |rep|}{2 \times rep}\right).\left(|rep| \, div \, 256\right)\left(|rep| \, \mathrm{mod} \, 256\right).$$

**9.** Système de fiabilité (70) pour attribuer une fiabilité à une entité de messagerie (50, 52), le système de fiabilité (70) étant configuré pour exécuter un procédé selon l'une quelconque des revendications 1 à 8.

**10.** Procédé d'exécution d'un filtrage de transmission utilisant des scores de fiabilité (360) de l'expéditeur de transmission (50, 52), le procédé comprenant :

l'identification (62) d'au moins une caractéristique relative à une transmission par un expéditeur (50, 52) ;
l'exécution d'une interrogation en temps réel (350) d'un système de fiabilité (70) qui comporte la caractéristique de transmission ;
la réception (240) depuis le système de fiabilité (70) d'un score (360) représentant la fiabilité associée à la transmission par l'expéditeur (50, 52), dans lequel le score (360) représentant la fiabilité associée à la transmission par l'expéditeur (50, 52) est un score déterminé en exécutant un procédé selon l'une quelconque des revendications 1 à 9 ;
l'exécution (64) d'une mesure sur la transmission par l'expéditeur (50, 52) correspondant à la plage de scores de fiabilité de l'expéditeur.

**11.** Procédé selon la revendication 10, dans lequel la mesure comporte au moins l'une des mesures suivantes :

le rejet de toute nouvelle transmission par cet expéditeur (50, 52) pendant une période de temps préétablie ou un nombre de transmissions préétabli ;
l'abandon silencieux de toutes les autres transmissions par cet expéditeur (50, 52) pendant une période de temps préétablie ou un nombre de transmissions préétabli ;
la mise en quarantaine de toute nouvelle transmission par cet expéditeur (50, 52) pendant une période de temps préétablie ou un nombre de transmissions préétabli ;
le contournement de certains tests de filtrage pour toute nouvelle transmission par cet expéditeur (50, 52) pendant une période de temps préétablie ou un nombre de transmissions préétabli.

**12.** Procédé selon la revendication 10, dans lequel l'étape d'identification (62) d'au moins une caractéristique comporte l'extraction d'informations d'identification uniques relatives à la transmission, ou l'authentification d'informations d'identification uniques relatives à la transmission, ou des combinaisons de celles-ci.

**13.** Système de filtrage (60, 460) pour exécuter un filtrage de transmission en utilisant des scores de fiabilité (360) d'un expéditeur de transmission (50, 52), le système de filtrage (60, 460) étant configuré pour exécuter un procédé selon l'une quelconque des revendications 10 à 12.

**FIG. 1**

EP 1 820 101 B1

**FIG. 2**

100

| | P$_{NR}$ (Probability of Non-Reputable Sender) | | | | | | | | | | |
|---|---|---|---|---|---|---|---|---|---|---|---|
| | 0.0 | 0.1 | 0.2 | 0.3 | 0.4 | 0.5 | 0.6 | 0.7 | 0.8 | 0.9 | 1.0 |
| 0.0 | 0 | -3 | -5 | -6 | -5 | -4 | -4 | -10 | -27 | -65 | -140 |
| 0.1 | 3 | 0 | -2 | -3 | -3 | -3 | -5 | -12 | -28 | -62 | -126 |
| 0.2 | 5 | 2 | 0 | -1 | -2 | -3 | -5 | -11 | -24 | -53 | -106 |
| 0.3 | 6 | 3 | 1 | 0 | -1 | -2 | -4 | -9 | -20 | -43 | -85 |
| 0.4 | 5 | 3 | 2 | 1 | 0 | -1 | -3 | -7 | -16 | -33 | -66 |
| 0.5 | 4 | 3 | 3 | 2 | 1 | 0 | -2 | -5 | -12 | -25 | -50 |
| 0.6 | 4 | 5 | 5 | 4 | 3 | 2 | 0 | -3 | -8 | -18 | -37 |
| 0.7 | 10 | 12 | 11 | 9 | 7 | 5 | 3 | 0 | -5 | -13 | -27 |
| 0.8 | 27 | 28 | 24 | 20 | 16 | 12 | 8 | 5 | 0 | -7 | -18 |
| 0.9 | 65 | 62 | 53 | 43 | 33 | 25 | 18 | 13 | 7 | 0 | -10 |
| 1.0 | 140 | 126 | 106 | 85 | 66 | 50 | 37 | 27 | 18 | 10 | 0 |

P$_R$ (Probability of Reputable Sender)

110

120

130

## FIG. 3

**FIG. 4**

EP 1 820 101 B1

# FIG. 5

DATA GATHERING — 200

DATA AGGREGATION — 210

PROBABILITY CALCULATION — 220

SCORE GENERATION — 230

SCORE DISTRIBUTION — 240

EP 1 820 101 B1

FILTERING SYSTEM 60

EMAIL MESSAGES

IDENTIFY MESSAGE CHARACTERISTIC(S) 62

QUERY INFO

REPUTATION SYSTEM 70

NON-REPUTABLE CRITERIA 300

TAKE ACTION BASED UPON REPUTATION SCORE 64

REPUTATION SCORE

REPUTABLE CRITERIA 310

DELIVER TRANSMISSION TO RECIPIENT

RECEIVING SYSTEM 80

**FIG. 6**

**FIG. 7**

FILTERING SYSTEM 60

IDENTIFY MESSAGE CHARACTERISTIC(S) 62

TAKE ACTION BASED UPON REPUTATION SCORE 64

EMAIL MESSAGES

QUERY INFO 350

RETURNED VALUE 360

REPUTATION SYSTEM 70

RECEIVING SYSTEM 80

EP 1 820 101 B1

MESSAGING ENTITY

MESSAGING ENTITY

MESSAGING ENTITY

440

NETWORK

450

430

TRANSMISSIONS RECEIVED OVER THE NETWORK

460

FILTERING SYSTEM

DELIVER TRANSMISSION TO RECIPIENT

470

RECEIVING SYSTEM

**FIG. 8**

**FIG. 9**

EP 1 820 101 B1

**FIG. 10**

NETWORK 440

TRANSMISSIONS RECEIVED OVER THE NETWORK 520

FILTERING SYSTEM 500

MESSAGE PROFILER 520

FILTER #1 × CONF. VALUE #1
FILTER #2 × CONF. VALUE #2
FILTER ... × CONF. VALUE ...
FILTER #N × CONF. VALUE #N

MESSAGE PROFILER SCORE 460

SCORE < THRESHOLD 520

NO → DROP, QUARANTINE, ... 530

YES → DELIVER TRANSMISSION TO RECIPIENT

RECEIVING SYSTEM 470

TUNER 600 510

HEURISTIC PROGRAM 610

FIG. 11

700

RECEIVE
COMMUNICATION

710

APPLY MULTIPLE
CLASSIFICATION
TECHNIQUES

720

COMBINE OUTPUTS
FROM THE MULTIPLE
CLASSIFICATION
TECHNIQUES

730

GENERATE MESSAGE
PROFILE SCORE

740

TAKE ACTION

## FIG. 12

**FIG. 13**

FIG. 14

**FIG. 15**

| | | $P_{NR}$ (Probability of Non-Reputable Sender) | | | | | | | | | | |
| --- | --- | --- | --- | --- | --- | --- | --- | --- | --- | --- | --- | --- |
| | | 0.0 | 0.1 | 0.2 | 0.3 | 0.4 | 0.5 | 0.6 | 0.7 | 0.8 | 0.9 | 1.0 |
| $P_R$ (Probability of Reputable Sender) | 0.0 | 0 | 3 | 5 | 6 | 5 | 4 | 4 | 10 | 27 | 65 | 140 |
| | 0.1 | -3 | 0 | 2 | 3 | 3 | 3 | 5 | 12 | 28 | 62 | 126 |
| | 0.2 | -5 | -2 | 0 | 1 | 2 | 3 | 5 | 11 | 24 | 53 | 106 |
| | 0.3 | -6 | -3 | -1 | 0 | 1 | 2 | 4 | 9 | 20 | 43 | 85 |
| | 0.4 | -5 | -3 | -2 | -1 | 0 | 1 | 3 | 7 | 16 | 33 | 66 |
| | 0.5 | -4 | -3 | -3 | -2 | -1 | 0 | 2 | 5 | 12 | 25 | 50 |
| | 0.6 | -4 | -5 | -5 | -4 | -3 | -2 | 0 | 3 | 8 | 18 | 37 |
| | 0.7 | -10 | -12 | -11 | -9 | -7 | -5 | -3 | 0 | 5 | 13 | 27 |
| | 0.8 | -27 | -28 | -24 | -20 | -16 | -12 | -8 | -5 | 0 | 7 | 18 |
| | 0.9 | -65 | -62 | -53 | -43 | -33 | -25 | -18 | -13 | -7 | 0 | 10 |
| | 1.0 | -140 | -126 | -106 | -85 | -66 | -50 | -37 | -27 | -18 | -10 | 0 |

1100

1110

1120

1130

**FIG. 16**

EP 1 820 101 B1

FIG. 17

**EP 1 820 101 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03077071 A2
- US 20040177120 A1
- US 625507 P